# EUROPEAN PATENT SPECIFICATION

(11) **EP 4 080 716 B1**
(45) Date of publication and mention of the grant of the patent: **06.09.2023**
(21) Application number: 21806124.0
(22) Date of filing: 10.03.2021
(51) Int. Cl.: H02J 7/00, H02J 1/10, B60L 50/60

(54) **PROTECTION CIRCUIT, HIGH-VOLTAGE LOOP, ELECTRICAL APPARATUS, CONTROL METHOD, DEVICE AND MEDIUM**
SCHUTZSCHALTUNG, HOCHSPANNUNGSSCHLEIFE, ELEKTRISCHES GERÄT, STEUERVERFAHREN, VORRICHTUNG UND MEDIUM
CIRCUIT DE PROTECTION, BOUCLE HAUTE TENSION, APPAREIL DE CONSOMMATION D'ÉNERGIE, PROCÉDÉ DE COMMANDE, DISPOSITIF ET SUPPORT

(43) Date of publication of application: 26.10.2022
(73) Proprietor: Jiangsu Contemporary Amperex Technology Limited, Changzhou, Jiangsu 213300 (CN)
(72) Inventor: LI, Jinbiao, Liyang City, Jiangsu 213300 (CN); YAN, Yu, Liyang City, Jiangsu 213300 (CN); DAN, Zhimin, Liyang City, Jiangsu 213300 (CN)
(74) Representative: Valea AB
(86) International application number: PCT/CN2021/080075
(87) International publication number: WO 2022/188075

(56) References cited:
- WO-A1-2019/132373
- CN-A- 109 818 393
- CN-A- 111 090 057
- CN-A- 111 511 600
- US-A1- 2014 028 094

## Description

### TECHNICAL FIELD

This application relates to the field of battery technology, and particularly to a protection circuit, high-voltage loop, electrical apparatus, control method, device and medium.

### BACKGROUND

With rapid development of battery technology, there is an increasing demand for battery control, especially for high-voltage and large-current batteries.

However, safety problems are often raised due to an impact of instantaneous large current, arcing and adhesion and so on, at a moment when a relay that is connected to a battery, such as a main positive relay and a charging positive relay etc., is turned on or off.

Therefore, there is a need for a technical solution that can improve the electrical safety of a high-voltage loop.

US 2014/028094A1 discloses power management and distribution (PMAD) systems employing hybrid solid-state circuit breaker (SSCB) circuits. Each Hybrid SSCB includes a main switch device, an auxiliary switch device, and a diode. The main switch is a power metal-oxide semiconductor field-effect transistor (MOSFET) device. The main switch is connected between a main DC bus and a load and is selectively turned On and Off via a main gate signal supplied by a PMAD controller. The auxiliary switch device is a thyristor (SCR). The diode is connected between the positive output provided to a load and a return line. The auxiliary switch is connected between an auxiliary DC bus and the load and is selectively turned On and Off via auxiliary gate control signal. During a pre-charge operation, the PMAD controller turns Off the main switch of the hybrid SSCB via the control signal, and the auxiliary switch is Off, and thus no power is supplied to the load; the PMAD controller turns on the auxiliary switch via control signal, and as a result, power is supplied to the load from the auxiliary DC bus.

### SUMMARY

The invention is set out in the appended set of claims.

### BRIEF DESCRIPTION OF THE DRAWINGS

In order to illustrate technical solutions of embodiments of the present application more clearly, drawings necessary for the embodiments of the present application will be introduced briefly below. Obviously, the drawings described below are only some embodiments of the present application, and other drawings may be obtained from those drawings by those having ordinary skills in the art without any creative work.
Fig. 1 is a schematic circuit diagram of a battery high-voltage loop and its pre-charging loop;
Fig. 2 is a schematic structural diagram of a battery high-voltage loop provided by an embodiment of the present application;
Fig. 3 is a schematic structural diagram of an exemplary battery high-voltage loop provided by an embodiment of the present application;
Fig. 4 is a schematic structural diagram of another battery high-voltage loop provided by an embodiment of the present application;
Fig. 5 is a schematic structural diagram of yet another battery high-voltage loop provided by an embodiment of the present application;
Fig. 6 is a schematic structural diagram of an exemplary battery high-voltage loop provided by an embodiment of the present application;
Fig. 7 is a schematic flowchart of a circuit control method provided by an embodiment of the present application;
Fig. 8 is a schematic flowchart of another circuit control method provided by an embodiment of the present application;
Fig. 9 is a schematic flowchart of yet another circuit control method provided by an embodiment of the present application;
Fig. 10 is a schematic flowchart of yet another circuit control method provided by an embodiment of the present application; and
Fig. 11 illustrates a schematic structural diagram of hardware of a circuit control device, provided by an embodiment of the present application.

### DETAILED DESCRIPTION

Implementations of the present application are described in further details below with reference to the drawings and embodiments. The following detailed description of the embodiments and drawings are used to illustrate principles of the present application exemplarily, instead of limiting the scope of the present application. That is, the present application is not limited to the described embodiments.

In the description of the application, it should be noted that, unless otherwise stated, "a plurality of" means two or more; the terms "top", "bottom", "left", "right", "inside", and "outside" used to indicate orientation or position relationships are only for purpose of facilitating the description of the application and simplifying the description, and do not indicate or imply that a device or element referred to must have a specific orientation, be constructed and operated in a specific orientation, and therefore cannot be understood as limitations to the application. In addition, the terms "first", "second", "third", etc. are only used for descriptive purposes, and cannot be understood as indicating or implying relative importance. "Vertical" is not strictly vertical, but within an allowable range of error. "Parallel" is not strictly parallel, but within an allowable range of error.

The orientation words appearing in the following description are all directions shown in the figures, and do not limit the specific structure of the application. In the description of the application, it should also be noted that, unless otherwise explicitly stated and defined, the terms "installation", "interconnection", and "connection" should be understood in a broad sense, for example, it may be a fixed connection or a detachable connection, an integral connection; it may be a direct connection or an indirect connection through an intermediate medium. For those of ordinary skills in the art, specific meanings of the above-mentioned terms in this application may be understood according to specific circumstances.

It is to be noted that relational terms such as first and second are used herein simply to distinguish one entity or operation from another entity or operation without necessarily requiring or implying any actual such relationship or order between such entities or operations. Moreover, terms "comprising", "including", or any other variation thereof, are intended to cover non-exclusive inclusion, such that a process, method, article or device that include a series of elements may not include only those elements but may include other elements not explicitly listed or inherent to such process, method, article or device. Without more constraints, elements preceded by "include..." do not preclude additional identical elements existing in the process, method, article or device that include the elements.

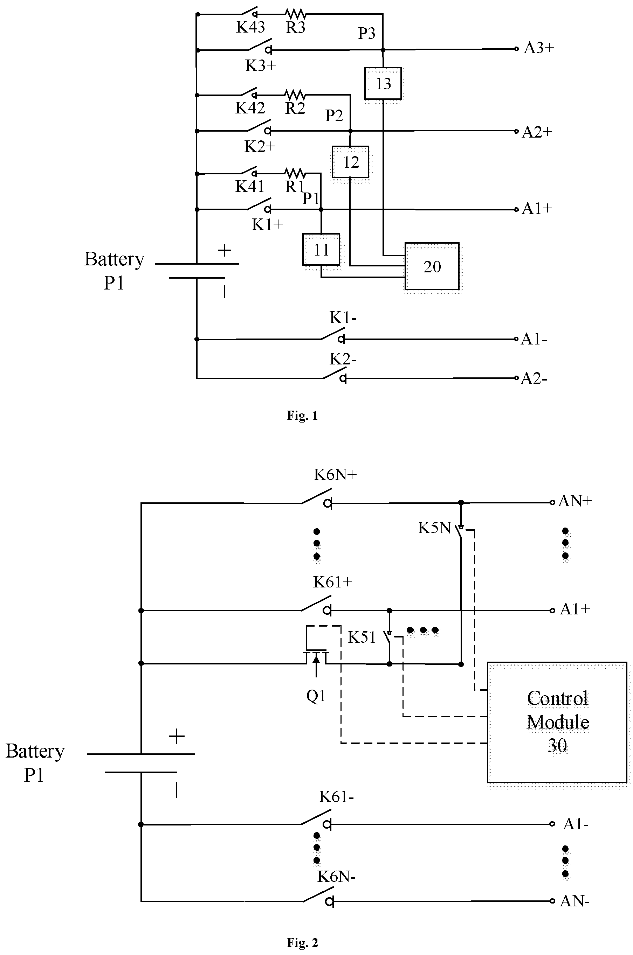

In some cases, Fig. 1 is a schematic circuit diagram of a battery high-voltage loop and its pre-charging loop. As shown in Fig. 1, the battery high-voltage loop includes a main positive switch unit K1+, a charging positive switch unit K2+, and a first electrical switch unit K3+. The main positive switch unit K1+, the charging positive switch unit K2+, and the first electrical switch unit K3+ may all be relays.

The main positive switch unit K1+ is described firstly. The main positive switch unit K1+ is arranged between a positive electrode of a battery P1 and a motor (not shown in Fig. 1). Particularly, an end of the main positive switch unit K1+ is connected to the positive electrode of the battery P1, and another end of the main positive switch unit K1+ is connected to a positive connecting port A1+ of the motor. The positive connecting port A1+ of the motor is used to connect a positive pole of the motor. A negative pole of the motor is connected to a negative electrode of the battery P1 through a negative connecting port A1- of the motor and a main negative switch unit K1- sequentially.

The charging positive switch unit K2+ is described secondly. The charging positive switch unit K2+ is arranged between the positive electrode of the battery P1 and an external charging apparatus (not shown in Fig. 1). Particularly, an end of the charging positive switch unit K2+ is connected to the positive electrode of the battery P1, and another end of the charging positive switch unit K2+ is connected to a positive charging port A2+. The positive charging port A2+ is used to connect a positive port of the external charging apparatus. A negative port of the external charging apparatus is connected to the negative electrode of the battery P1 through a negative charging port A2- and a charging negative switch unit K2- sequentially.

The first electrical switch unit K3+ is described thirdly. The first electrical switch unit K3+ is arranged between the positive electrode of the battery P1 and a high-voltage electrical device (not shown in Fig. 1). Particularly, an end of the first electrical switch unit K3+ is connected to the positive electrode of the battery P1, and another end of the first electrical switch unit K3+ is connected to a high-voltage output port A3+. The high-voltage output port A3+ is used to connect an end of the high-voltage electrical device.

As further shown in Fig. 1, the pre-charging circuit includes a first pre-charging switch K41, a second pre-charging switch K42, a third pre-charging switch K43, a first pre-charging resistor R1, a second pre-charging resistor R2, and a third pre-charging resistor R3.. The first pre-charging switch K41, the second pre-charging switch K42, and the third pre-charging switch K43 may all be relays.
The series-connected first pre-charging switch K41 and first pre-charging resistor R1 are connected in parallel with the main positive switch unit K1+. That is, an end of the first pre-charging switch K41 is connected to the end of the main positive switch unit K1+, another end of the first pre-charging switch K41 is connected to an end of the first pre-charging resistor R1, and another end of the first pre-charging resistor R1 is connected to the another end of the main positive switch unit K1+. The first pre-charging switch K41 keeps being turned on, before the main positive switch unit K1+ is closed, to pre-charge the motor
The series-connected second pre-charging switch K42 and the second pre-charging resistor R2 are connected in parallel with the charging positive switch unit K2+. That is, an end of the second pre-charging switch K42 is connected to the end of the charging positive switch unit K2+, another end of the second pre-charging switch K42 is connected to an end of the second pre-charging resistor R2, and another end of the second pre-charging resistor R2 is connected to the another end of the charging switch unit K2+. The second pre-charging switch K42 keeps being turned on, before the charging switch unit K2+ is closed, to pre-charge the external charging apparatus
The series-connected third pre-charging switch K43 and the third pre-charging resistor R3 are connected in parallel with the first electrical switch unit K3+. That is, an end of the third pre-charging switch K43 is connected to the end of the first electrical switch unit K3+, another end of the third pre-charging switch K43 is connected to an end of the third pre-charging resistor R3, and another end of the third pre-charging resistor R3 is connected to the another end of the first electrical switch unit K3+. The third pre-charge switch K43 keeps being turned on, before the first electrical switch unit K3+ is closed, to pre-charge the high-voltage electrical device.

In addition, as further shown Fig. 1, the battery high-voltage loop may also include a first sampling module 11 for collecting a voltage of a first sampling port P1, a second sampling module 12 for collecting a voltage of a second sampling port P2, and a third sampling module 13 for collecting a voltage of a third sampling port P3. The first sampling port P1 is arranged at the another end of the main positive switch unit K1+, the second sampling port P2 is arranged at the another end of the charging positive switch unit K2+, and the third sampling port P3 is arranged at the another end of the first electrical switch unit K3+.

Further, the battery high-voltage loop may also include a control module 20. The control module 20 determines whether to end corresponding pre-charging processes, according to the voltages sampled by the first sampling module 11, the second sampling module 12 and the third sampling module 13, i.e., according to the voltage of the another end P1 of the main positive switch unit K1+, the voltage of the another end P2 of the charging positive switch unit K2+, and the voltage of the first electrical switch unit K3+.

In addition, as further shown Fig. 1, the battery high-voltage loop may also include a main negative switch unit K1-, a charging negative switch unit K2-, and a second electrical switch unit (not shown in Fig. 1).

An end of the main negative switch unit K1- is connected to the negative electrode of the battery P1, and another end of the main negative switch unit K1- is connected to a negative connecting port A1- of the motor.

An end of the charging negative switch unit K2- is connected to the negative electrode of the battery P1, and another end of the charging negative switch unit K2- is connected to a negative charging port A2-.

An end of the second electrical switch unit is connected to the negative electrode of the battery P1, and another end of the second electrical switch unit is connected to the high-voltage output port. It should be noted that the connection relationship is not shown in the figure. In some cases, the another end of the high-voltage electrical device and the negative electrode of the battery P1 may both be grounded. In such cases, it may be considered that the another end of the high-voltage electrical device is connected directly to the negative electrode of the battery P1.

However, the battery high-voltage loop and the pre-charging loop in the above cases have the following technical problems: (1) there may be safety risks, such as arcing or adhesion of relay contacts, as well as loaded closing and loaded cutting-off, during high-voltage power-on and power-off processes of the main positive switch unit K1+, the charging positive switch unit K2+, and the first electrical switch unit K3+; (2) problems, such as structural redundancy and cost waste, may be caused, since for each of the main positive switch unit K1+, the charging positive switch unit K2+, and the first electrical switch unit K3+, there is a need to connect a pre-charging branch in parallel therewith; (3) the problems, such as structural redundancy and cost waste, may be caused, since it is necessary to set up multiple sampling modules and multiple sampling ports respectively; and (4) the pre-charging efficiency is low due to the low pre-charging current, since the pre-charging switch is continuously turned on during the pre-charging process.

Therefore, there is a need for a technical solution that can solve at least one of the above-mentioned defects.

In light of that, an embodiment of the present application provides a protection circuit, high-voltage loop, electrical apparatus, control method, device and medium, which can be applied to application scenarios that improve the electrical safety of the battery high-voltage loop. Exemplarily, the application scenarios may include specific application scenarios where a first control switch unit arranged on the power transmission circuit of the battery is turned on, the first control switch unit is turned off, or the first control switch unit is pre-charged. Compared with the above-mentioned related art, the present application can avoid safety risks, such as arcing or adhesion of relay contacts, and improve the electricity safety of the battery high-voltage loop, since the semiconductor switch unit is connected to each first control switch unit via an auxiliary switch unit corresponding to the first control switch unit, in the switching stage during which the on-off state of the first control switch unit is switched, the auxiliary switch unit and the semiconductor switch unit may be controlled to be in the continuous on state, and in the corresponding pre-charging stage, the semiconductor switch unit may be controlled to be turned on/off intermittently.

Firstly, in order to facilitate understanding of the present application, embodiments of the present application explain specifically concepts, such as batteries, semiconductor switch units, mechanical switches, and high-voltage electrical devices.
(1) Batteries-the batteries in the embodiments of the present application may include lithium ion batteries, lithium metal batteries, lead-acid batteries, nickel-cadmium batteries, nickel-hydrogen batteries, lithium-sulfur batteries, lithium air batteries, or sodium ion batteries, which is not limited herein. In terms of scale, the batteries in the embodiments of the present application may be battery cells, or may be battery modules or battery packs, which is not limited herein. In terms of application scenarios, the batteries may be applied in power plants such as automobiles and ships. For example, the batteries may be applied in electric vehicles to act as power sources for the electric vehicles to supply power to motors of the electric vehicles. The batteries may also provide power for other electrical devices in the electric vehicles, such as in-vehicle air conditioners, vehicle-mounted players etc..
(2) Semiconductor switch units-the semiconductor switch units refer to switches made of semiconductor. Exemplarily, the semiconductor switch units may be implemented specifically as triodes, Metal-Oxide-Semiconductor Field-Effect Transistors (Metal-Oxide-Semiconductor Field-Effect Transistors, MOSFETs), and Insulated Gate Bipolar Transistors (Insulated Gate Bipolar Transistors, IGBT). Specific types of the semiconductor switch units Q1 are not limited herein.
(3) Mechanical switches-the mechanical switches are switches that change on and off states of circuits using mechanical touch. In addition, the mechanical switches may also be used for electrical isolation. Exemplarily, the mechanical switches may be relays or other mechanical switches, which is not limited herein.
(4) High-voltage electrical devices-the high-voltage electrical devices in the embodiments of the present application refer to electrical devices other than motors, which use batteries as power sources. Exemplarily, for batteries installed in cars, the high-voltage electrical devices may include Direct Current-Direct Current (DCDC) converters, ON-Board Controllers (OBCs), Power Distribution Units (PDUs), oil pumps, water pumps, Air conditioners (ACs), etc.

After the introduction of the above concepts, in order to facilitate understanding of the present application, the safety protection circuit, the battery high-voltage loop, and the electrical apparatus according to the embodiments of the present application will be described in details in conjunction with the accompanying drawings below. It should be noted that these embodiments are not used to limit the scope of the present disclosure.

Firstly, an embodiment of the present application describes the electrical apparatus in details.

The electrical apparatus in the embodiment of the present application may refer to an apparatus that uses the battery P1 as its power source, for example, an apparatus such as an electric vehicle or an electric ship etc..

Particularly, a power battery may include the battery P1 and the battery high-voltage loop. The battery high-voltage loop may include a safety protection circuit and a first control switch unit.

Firstly, before introducing the first control switch unit, the embodiment of the present application illustrates a control switch unit arranged on the power transmission lines of the battery P1 in details. The power transmission lines of the battery P1 may include positive power transmission lines and negative power transmission lines. The positive power transmission lines refer to connection lines between the positive electrode of the battery P1 and devices, such as the motor, external charging apparatus and high-voltage electrical devices; and correspondingly, the negative power transmission lines refer to lines between the negative electrode of the battery P1 and the above devices. In an example, the positive transmission lines of the battery may include N positive transmission lines of a positive transmission line between the battery P1 and the motor, a positive transmission line between the battery P1 and the external charging apparatus, and a positive transmission line between the battery P1 and the high-voltage electrical device. In another example, the negative power transmission lines of the battery may include M negative power transmission lines of a negative power transmission line between the battery P1 and the motor, a negative power transmission line between the battery P1 and the external charging apparatus, and a negative power transmission line between the battery P1 and the high-voltage electrical device.

In order to facilitate controlling a power transmission process of the battery P1, there is a case where the positive power transmission lines and the negative power transmission lines of the battery P 1 may be provided with positive control switch units and negative control switch units, respectively. Exemplarily, Fig. 2 is a schematic structural diagram of a battery high-voltage loop provided by an embodiment of the present application. As shown in Fig. 2, the positive power transmission lines of the battery P1 are provided with positive control switch units K61+ to K6N+, and the negative power transmission lines of the battery P1 are provided with negative control switch units K61- to K6M-, where *M* and *N* are any positive integers, for example, M and/or N are greater than or equal to 2.

In another case, the positive power transmission lines of the battery P1 may be provided with positive control switch units, such as a main positive switch unit, a charging positive switch unit, and a first electrical switch unit. Exemplarily, as further shown Fig. 2, the positive power transmission lines of the battery P1 are provided with positive control switch units K61+ to K6N+, and the negative power transmission lines of the battery P1 are not provided with negative control switch units.

In yet another case, the negative power transmission lines of the battery P1 may be provided with negative control switch units, such as a main negative switch unit, a charging negative switch unit, and a second electrical switch unit. Exemplarily, the positive power transmission lines of the battery P1 are not provided with positive control switch units, and the negative power transmission lines of the battery P1 are provided with negative control switch units K61-to K6M-.

After introducing the positive control switch units and the negative control switch units, the following section of embodiments of the present application will describe the first control switch units in details.

In a case where the positive power transmission lines of the battery P1 are provided with the positive control switch units, the first control switch units are the positive control switch units. For example, as further shown in Fig. 2, the first control switch units may be the positive control switch units K61+ to K6N+.

In an embodiment, the first control switch units K61+ to K6N+ may be N positive switch units of the main positive switch unit, the charging positive switch unit, and the first electrical switch unit. In the embodiment, the external charging apparatus may be a charging apparatus, such as a charging pile or a vehicle-mounted charger.

The first control switch units K61+ to K6N+ may be determined by functions of the electrical apparatus. In an example, if the electrical apparatus does not have a charging function, the first control switch units K61+ to K6N+ may include the main positive switch unit and the electrical switch unit. In another example, if the high-voltage electrical device of the electrical apparatus is powered by a power source other than the battery P1, the first control switch units K61+ to K6N+ may include the main positive switch unit and the charging positive switch unit. In another example, if the electrical apparatus has the charging function and the high-voltage electrical device can be powered by the battery P 1, the first control switch units K61+ to K6N+ may include the main positive switch unit, the charging positive switch unit, and the electrical switch unit. It should be noted that, depending on different functions of the electric device, the first control switch units may also have other combinations, which are not specifically limited in the embodiment of the present application. It should be noted that specific content of the main positive switch unit, the charging positive switch unit, and the electrical switch unit may be referred to the related description of the above embodiments of the present application in conjunction with Fig. 1, and will not be repeated here.

In another case where the negative power transmission lines of the battery P1 are provided with negative control switch units, the first control switch units are negative control switch units. For example, as further shown in Fig. 2, the first control switch units may be the negative control switch units K61- to K6M-. In a particular example, the first control switch units K61- to K6M- may be M negative switch units of the main negative switch unit, the charging negative switch unit, and the second electrical switch unit.

In an example, if the electrical apparatus does not have the charging function, the first control switch units K61-to K6M- may include the main negative switch unit and the first electrical switch unit. In another example, if the high-voltage electrical device of the electrical apparatus is powered by a power source other than the battery P1, the first control switch units K61- to K6M- may include the main negative switch unit and the charging negative switch unit. In yet another example, if the electrical apparatus has the charging function and the high-voltage electrical device can be powered by the battery P1, the first control switch units K61- to K6M- may include the main negative switch unit, the charging negative switch unit, and the second electrical switch unit. It should be noted that, depending on different functions of the electric apparatus, the first control switch units may also have other combinations, which are not specifically limited in the embodiment of the present application. It should be noted that specific content of the main negative switch unit, the charging negative switch unit and the second electrical switch unit may be referred to the related description of the above embodiments of the present application in conjunction with Fig. 1, and will not be repeated here.

In yet another case where the positive power transmission lines and the negative power transmission lines of the battery P1 are provided with the positive control switch units and the negative control switch units respectively, the first control switch units may include the positive control switch units K61+ to K6N+ and/or the negative control switch units K61- to K6M-. For the first control switch units, reference may be made to relevant descriptions of the above embodiments of the present application, which will not be repeated here.

After introducing the first control switch units, the following section of embodiments of the present application will describe the safety protection circuit in details.

For ease of understanding, the following section of embodiments of the present application will describe specifically the safety protection circuit with further reference to Fig. 2. It should be noted that Fig. 2 only shows a case where the first switch control units are positive control switch units. In other cases, the first switch control units may also include negative control switch units. If the first switch control units only include the negative control switch units, a semiconductor switch unit Q1 is connected in parallel with each of the M negative control switch units through a respective one of M auxiliary switch units. In addition, if the first control switch units include the positive control switch units and the negative control switch units, the number of semiconductor switch units is two, and one of the semiconductor switch units is connected in parallel with each of the N positive control switch units through a respective one of N auxiliary switch units, and the other semiconductor switch unit is connected in parallel with each of the M negative control switch units through a respective one of M auxiliary switch units.

As further shown in Fig. 2, the safety protection circuit includes N auxiliary switch units K51 to K5N, the semiconductor switch unit Q1 and a control module 30.

Firstly, for the auxiliary switch units, the *N* auxiliary switch units K51 to K5N correspond to the *N* first control switch units K61+ to K6N+ one-to-one. That is to say, the auxiliary switch unit K51 corresponds to the first control switch unit K61+, the auxiliary switch unit K52 corresponds to the first control switch unit K62+, ... , and the auxiliary switch unit K5N corresponds to the first control switch unit K6N+.

In an embodiment, the N auxiliary switch units K51 to K5N may be mechanical switches.

In the embodiment of the present application, setting the auxiliary switch units K51 to K5N as mechanical switches, compared with setting them as semiconductor switch units, has the following advantages. (1) The conduction loss can be reduced. (2) A risk of thermal runaway caused by heating of the semiconductor switch units can be decreased. (3) A risk of thermal failure can be reduced and a problem of increased cost can be solved, since there is no need to install a cooling structure additionally. (4) Electrical isolation of the safety protection circuit can be achieved using electrical characteristics of the mechanical switches, so that the safety protection circuit may satisfy the isolation standard of vehicle regulation level.

Secondly, the semiconductor switch unit Q1 is described.

The semiconductor switch unit Q1 is connected in parallel with a first control switch unit through an auxiliary switch unit corresponding to the first control switch unit. Exemplarily, as further shown in Fig. 2, an end of the semiconductor switch unit Q1 is connected to the positive electrode of the battery P 1, another end of the semiconductor switch unit Q1 is connected to another end of the first control switch unit K61+ through the auxiliary switch unit K51, and an end of the first control switch unit K61+ is connected to the positive electrode of the battery P 1..... The end of the semiconductor switch unit Q1 is connected to the positive electrode of the battery P1, the another end of the semiconductor switch unit Q1 is connected to another end of the first control switch unit K6N+ through the auxiliary switch unit K5N, and an end of the first control switch unit K6N+ is connected to the positive electrode of the battery P1.

Next, the control module 30 is described.

The control module 30 can control on-off states of the semiconductor switch unit Q1 and at least one of the auxiliary switch units K51 to K5N in the pre-charging stage and/or in a switching stage during which an on-off state at least one of the first control switch units K61+ to K6N+ is switched. Particularly, the control module 30 may be implemented as a Micro Control Unit (MCU). In an example, the control module 30 may be implemented as a high-voltage Power Distribution Unit (PDU).

Particularly, the control module 30 may receive a target control instruction, enter a target stage in response to the target control instruction, and in the target stage, control an auxiliary switch unit corresponding to a target switch unit of the N first control switch units to be in a first on-off state, and control the semiconductor switch unit to be in a second on-off state. The target stage includes a pre-charging stage corresponding to the target switch unit and/or a switching stage during which an on-off state of the target switch unit is switched. In an example, as further shown in Fig. 2, the target switch unit may be one or more of the first control switch units K61+ to K6N+.

In some embodiments, the control module 30 is further configured to control the auxiliary switch unit corresponding to the target switch unit to be in a continuous off state and control the semiconductor switch unit to be in a continuous off state, after the target stage ends.

In some embodiments, the control module 30 may include a first control unit and a second control unit.

The first control unit is configured to control the auxiliary switch unit corresponding to the target switch unit to enter the first on-off state.

The second control unit is configured to control the semiconductor switch unit to enter the second on-off state, after a preset time period since the auxiliary switch unit corresponding to the target switch unit entered the first on-off state.

The control module 30 will be illustrated in details in conjunction with the pre-charging stage and the switching stage for switching the on-off state respectively, in the following section of the present application.

The pre-charging stage is described firstly.

If the target stage is the corresponding to the target switch unit, the first on-off state is a continuous on state, and the second on-off mode is an intermittent on state. The intermittent on state is a state including an on state for a part of a period of the state and an off state for the other part of the period of the state.

That is to say, in the pre-charging stage, the control module 30 is specifically configured to control the auxiliary switch unit corresponding to the target switch unit to be in the continuous on state and control the semiconductor switch unit Q1 to be in the intermittent on state, during the pre-charging process corresponding to the target switch unit.

Specific control modes of the switches during the pre-charging process are discussed below. Exemplarily, if the target switch unit includes the main positive switch unit, the auxiliary switch unit K51 is controlled to be in the continuous on state, and the semiconductor switch unit Q1 is controlled to be in the intermittent on state, during the process of pre-charging a capacitor of the motor. As another example, if the target switch unit includes the charging positive switch unit, the auxiliary switch unit K52 is controlled to in the continuous on state, and the semiconductor switch unit Q1 is controlled to be in the intermittent on state, during the process of pre-charging a capacitor of the external charging apparatus. As yet another example, if the target switch unit includes an electrical switch unit, the auxiliary switch unit K53 is controlled to be in the continuous on state, and the semiconductor switch unit Q1 is controlled to be in the intermittent on state, during the process of pre-charging a capacitor of the high-voltage electrical device. It should be noted that specific implementations in which the target switch unit includes the main negative switch unit, the charging negative switch unit, or the second electrical switch unit are similar as those, which will not be repeated here.

The control signal that causes the semiconductor switch unit Q1 to be in the intermittent on-off state is discussed below. Exemplarily, the semiconductor switch unit Q1 may be controlled to be in the intermittent on state by a pulse signal input to a control terminal of the semiconductor switch unit Q1. For example, the pulse signal may be a Pulse Width Modulation (PWM) signal.

In an example, a period and duty ratio of the PWM signal required for a load capacitor to be charged to 95% or more of a power supply voltage within a required pre-charging time may be calculated according to parameters of the capacitor and the pre-charging time requirements. The PWM signal with the particular period and duty ratio may then be output by a PWM control unit, when a circuit current keeps in a safe range. The PWM signal may be output to the control terminal of the semiconductor switch unit Q1, such as a gate of the semiconductor switch. In addition, the PWM signal may also be transmitted to the MCU synchronously.

In a specific example, the first control unit is configured to control the auxiliary switch unit corresponding to the target switch unit to enter the continuous on state. The target switch unit may be one or more switch units of the first control switch units. In an example, the first control unit may control the auxiliary switch unit corresponding to the target switch unit to close in response to a pre-charging instruction. Exemplarily, the pre-charging instruction may be sent by a Battery Management System (BMS).

In an example, the first control unit may enter the process of pre-charging the motor capacitor, after receiving a power-on request instruction of an electrical apparatus. For example, the electrical apparatus may be an electric vehicle. In another example, the first control unit may enter the process of pre-charging the capacitor of the external charging apparatus, after receiving a charging request instruction of the battery P1. In yet another example, the first control unit may enter the process of pre-charging the capacitor of the high-voltage electric device, after receiving a power-on request instruction of the high-voltage electric device.

The second control unit is configured to control the semiconductor switch unit to be in the intermittent on state, after a preset time period since the corresponding auxiliary switch unit is closed. In an example, in order to prevent an arcing risk, it may be ensured that the semiconductor switch unit Q1 is turned on before the auxiliary switch unit. At this time, the preset time period is greater than or equal to a time period required by the auxiliary switch unit to go from the off state to the on state. For example, the preset time period may be 20 milliseconds (ms). It should be noted that the preset time period can also be set according to specific scenarios and actual needs, which is not limited specifically.

In the embodiment of the present application where the semiconductor switch unit Q1 is controlled to be turned on intermittently, compared with the solution of controlling the pre-charging switch to be in the continuous on state, a pre-charging rate can be flexibly adjusted since the pre-charging current can be controlled according to parameters such as a conduction frequency and a duty ratio of the control signal, and thereby, the flexibility of the entire pre-charging process can be improved.

In addition, in the embodiment of the present application where the semiconductor switch unit Q1 is controlled to be turned on intermittently, the electricity safety of the pre-charging process can be improved, since there is no arcing or adhesion risk for the semiconductor switch unit.

In one embodiment, in order to improve the electricity safety, the control module 30 may further include a third control unit.

The third control unit is configured to control the target switch unit to be closed firstly, and then control the semiconductor switch unit and the auxiliary switch unit corresponding to the target switch unit to be disconnected sequentially, after the pre-charging process ends. In an example, it may be determined whether to stop the pre-charging process according to whether a voltage value of the another end of the target switch unit sampled by the sampling module is close to a voltage value of the battery. In another example, in order to improve the accuracy of the determination, it is possible to determine whether to stop the pre-charging process according to whether the voltage value of the other end of the target switch unit is close to the voltage value of the battery and whether a current value in the pre-charging loop is close to zero. It should be noted that the end of the target switch unit is connected to the positive electrode of the battery.

The switching stage during which the on-off state of the target switch unit is switched is described secondly. Switching the on-off state of the target switch unit may include switching form the off state to the on state, or include switching form the on state to the off state.

The control module 30 is configured to control both the auxiliary switch unit corresponding to the target switch unit and the semiconductor switch unit Q1 to be in the continuous on state, in the switching stage during which the on-off state of the target switch unit is switched. Particularly, the auxiliary switch unit corresponding to the target switch unit and the semiconductor switch unit Q1 may be controlled to be turned on, before the target switch unit is turned on or off. That is to say, in the switching stage, the auxiliary switch unit and the semiconductor switch unit may be firstly controlled to enter the continuous on state, and then the target switch unit may be controlled to switch from the off state to the on state or switch from the on state to the off state.

In an embodiment, if the auxiliary switch units are mechanical switches, in order to prevent arcing or adhesion phenomena, the auxiliary switch unit may be firstly controlled to be turned on, and then the semiconductor switch unit Q1 may be controlled to be turned on. Particularly, the semiconductor switch unit is controlled to be turned on after the preset time period since the auxiliary switch unit K5i has been controlled to be turned on. For the preset time period, related description of the above embodiments of the present application may be referred to, which will not be repeated here. "*i*" is any positive integer less than or equal to *N.*

In an embodiment, the semiconductor switch unit Q1 and the auxiliary switch unit may be controlled to be turned off sequentially, after the on-off state of the target switch unit is switched.

According to the embodiments of the present application, the auxiliary switch unit and the semiconductor switch unit are controlled to be turned on before the on-off state of the first control switch unit is switched, whereby safety risks such as arcing and thus improve safety can be prevented, since the safety risks such as arcing may happen during the process of switching the on-off state of the first control switch unit.

According to the safety protection circuit provided the embodiment of the present application, safety risks such as arcing or adhesion of relay contacts can be avoided and the electricity safety of the battery high-voltage loop can be improved, since the semiconductor switch unit is connected to each first control switch unit via an auxiliary switch unit corresponding to the first control switch unit, in the switching stage during which the on-off state of the first control switch unit is switched, the auxiliary switch unit and the semiconductor switch unit may be controlled to be turned on, and in the corresponding pre-charging stage, the semiconductor switch unit may be controlled to be turned on/off intermittently.

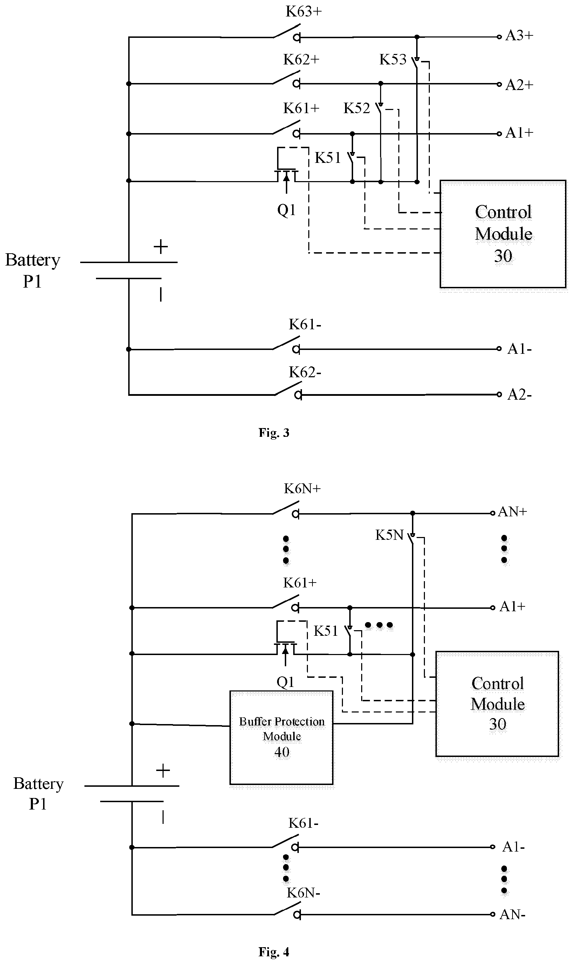

In addition, since only one semiconductor switch unit is needed to control multiple first control switch units, multiplexing of the semiconductor switch unit can be realized, so as to save costs and simplify the circuit structure. For ease of understanding, an example in which the first control switch units include the main positive switch unit, the charging positive switch unit, and the electrical switch unit is described in the following embodiments of the present application in conjunction with Fig. 3, to illustrate the specific connection structure of the safety protection circuit in details.

Fig. 3 is a schematic structural diagram of an exemplary safety protection circuit provided by an embodiment of the present application. As shown in Fig. 3, the first control switch units include the main positive switch unit K61+, the charging positive switch unit K62+, and the electrical switch unit K63+.

Correspondingly, the safety protection circuit includes the auxiliary switch unit K51, the auxiliary switch unit K52, the auxiliary switch unit K53, and the semiconductor switch unit Q1.

As further shown in Fig. 3, the end of the semiconductor switch unit Q1, the end of the main positive switch unit K61+, the end of the charging positive switch unit K62+, and the end of the electrical switch unit K63+ are all connected to the positive electrode of the battery P1.

The another end of the semiconductor switch unit Q1 is connected to the another end of the main positive switch unit K61+ through the auxiliary switch unit K51.

The another end of the semiconductor switch unit Q1 is connected to the another end of the charging positive switch unit K62+ through the auxiliary switch unit K52.

The another end of the semiconductor switch unit Q1 is connected to the another end of the electrical switch unit K63+ through the auxiliary switch unit K53.

In some embodiments, the control module 30 may control the main positive switch unit K61+ to be turned on according to the power-on request instruction of the electrical apparatus. Correspondingly, the control module 30 may include:
the first control unit, configured to receive the high-voltage power-on request instruction of the electrical apparatus, and after a preset time period (greater than reaction time required for the relay to close, for example, 20ms) control the auxiliary switch unit K51 to be turned on;
the second control unit, configured to control the semiconductor switch unit Q1 to be turned on intermittently, after the auxiliary switch unit K51 is turned on and a preset time period has elapsed, to pre-charge the motor capacitor; and
the third control unit, configured to control the main positive switch unit K61+ to be turned on when the pre-charging is finished and the semiconductor switch unit Q1 and the auxiliary switch unit K51 remain in the on state.

It should be noted that, if the first control switch units include negative control switch units, specific control modes of the control module 30 after receiving the power-on request instruction of the electrical device are similar as those of the positive control switch units, and will not be repeated here.

In an embodiment, the control module 30 may further include:
a fourth control unit, configured to control the semiconductor switch unit Q1 and the auxiliary switch unit K51 to be turned off sequentially after the main positive switch unit K61+ is turned on and a preset time period has elapsed.

It should be noted that energy losses of the semiconductor switch unit Q1 can be avoided and a heating phenomenon of the semiconductor switch unit Q1 after the entire vehicle is powered on, by that the semiconductor switch unit Q1 and the auxiliary switch unit K51 are controlled to be disconnected after the main positive switch unit K61+ is turned on. Therefore, there is no need for additional thermal design and the cost can be reduced.

In an embodiment, the control module 30 may further include:
a fifth control unit, configured to diagnose the state of the semiconductor switch unit Q1 before the main positive switch unit K61+ is turned on. Particularly, if the semiconductor switch unit Q1 is in the on state, it is determined that the semiconductor switch unit is in a normal state, and in this case, the main positive switch unit K61+ can be controlled to be turned on normally; and if the semiconductor switch unit Q1 is in the off state, a fault should be reported, and the entire vehicle should be powered off.

It should be noted that the fifth control unit can ensure that the main positive switch unit K61+ will not face an abnormal operating condition of loaded closing, such that the risk such as arcing of the main positive switch unit K61+ can be further avoided and thereby the electricity safety can be further improved.

In some embodiments, the control module 30 may control the charging positive switch unit K62+ to be turned on according to the charging request instruction of the battery P1. Correspondingly, the control module 30 may include:
a sixth control unit, configured to control the auxiliary switch unit K52 to be turned on after the charging request instruction of the battery P1 is received and a preset time period has elapsed;
a seventh control unit, configured to control the semiconductor switch unit Q1 to be turned on intermittently, after the auxiliary switch unit K52 is turned on and a preset time period has elapsed, so as to pre-charge the capacitor of the external charging apparatus; and
an eighth control unit, configured to control the charging positive switch unit K62+ to be turned on when the pre-charging is finished and the semiconductor switch unit Q1 and the auxiliary switch unit K52 remain in the on state.

It should be noted that if the first control switch units include negative control switch units, specific control modes of the control module 30 after receiving the charging request instruction of the battery P1 are similar as those of the positive control switch units, and will not be repeated here.

In an embodiment, the control module 30 may further include:
a ninth control unit, configured to control the semiconductor switch unit Q1 and the auxiliary switch unit K52 to be turned off sequentially, after the charging positive switch unit K62+ is turned on and a preset time period has elapsed.

In an embodiment, the control module 30 may further include:
a tenth control unit, configured to diagnose the state of the semiconductor switch unit Q1 before the charging positive switch unit K62+ is turned on. Particularly, if the semiconductor switch unit Q1 is in the on state, it is determined that the state of the semiconductor switch unit Q1 is normal, and in this case, the charging positive switch unit K62+ can be controlled to be turned on normally; and if the semiconductor switch unit Q1 is in the off state, a fault should be reported, and the entire vehicle should be powered off.

It should be noted that the tenth control unit can ensure that the charging positive switch unit K62+ will not face an abnormal operating condition of loaded closing, such that the risk such as arcing of the charging positive switch unit K62+ can be further avoided and thereby the electricity safety can be further improved.

In some embodiments, the control module 30 can control the main positive switch unit K61+ to be turned off according to the power-off request instruction of the electrical apparatus. Correspondingly, the control module 30 may include:
an eleventh control unit, configured to control the auxiliary switch unit K51 to be turned on after receiving the power-off request instruction of the electrical apparatus; in an example, the control module 30 may also control high-voltage components of the electrical apparatus to discharge in response to the power-off request instruction of the electrical apparatus;
an twelfth control unit, configured to control the semiconductor switch unit Q1 to be turned on after the auxiliary switch unit K51 is turned on and a preset time period has elapsed; and
a thirteenth control unit, configured to control the main positive switch unit K61+ to be turned off after the semiconductor switch unit Q1 is turned on and a preset time period has elapsed.

It should be noted that if the first control switch units include negative control switch units, specific control modes of the control module 30 after receiving the power-off request instruction of the battery P1 are similar as those of the positive control switch units, and will not be repeated here.

In an example, the control module 30 may further include:
a fourteenth control unit, configured to control the semiconductor switch unit Q1 and the auxiliary switch unit K51 to be turned off sequentially after the main positive switch unit K61+ is turned off and a preset time period has elapsed.

In some embodiments, in order to further improve safety, the control module 30 may further include a fifteenth control unit.

The fifteenth control unit is configured to control the main negative switch unit K61- to be turned off after the semiconductor switch unit Q1 and the auxiliary switch unit K51 are turned off and a preset time period has elapsed.

In an example, the control module 30 may further include:
a sixteenth control unit, configured to diagnose the state of the semiconductor switch unit Q1 before the main positive switch unit K61+ is turned off. Particularly, if the semiconductor switch unit Q1 is in the on state, it is determined that the state of the semiconductor switch unit Q1 is normal, and in this case, the main positive switch unit K61+ may be controlled to be turned off normally; and if the semiconductor switch unit Q1 is in the off state, a fault should be reported, and an emergency power-off procedure should be performed. In a particular example, the emergency power-off procedure may include controlling the main negative switch unit K61- to be turned off at first, and then controlling the main positive switch unit K61+ to be turned off.

It should be noted that the sixteenth control unit can ensure that the main positive switch unit K61+ will not face an abnormal operating conditions of loaded cutting-off, such that the risk such as arcing of the main positive switch unit K61+ can be further avoided and thereby the electricity safety can be further improved.

In some embodiments, the control module 30 may control the charging positive switch unit K62+ to be turned off safely after the battery is fully charged. Correspondingly, the control module 30 may include:
a seventeenth control unit, configured to control the auxiliary switch unit K52 to be turned on after receiving an charging ending request instruction of the battery;
an eighteenth control unit, configured to control the semiconductor switch unit Q1 to be turned on after the auxiliary switch unit K52 is turned on and a preset time period has elapsed; and
a nineteenth control unit, configured to control the charging positive switch unit K62+ to be turned off after the semiconductor switch unit Q1 is turned on.

It should be noted that, if the first control switch units include negative control switch units, specific control modes of the control module 30 after receiving the charging ending request instruction are similar as those of the positive control switch units, and will not be repeated here.

In an example, the control module 30 may further include:
a twentieth control unit, configured to control the semiconductor switch unit Q1 and the auxiliary switch unit K52 to be turned off sequentially after the charging positive switch unit K62+ is turned off and a preset time period has elapsed.

In some embodiments, in order to further improve safety, the control module 30 may further include a twenty-first control unit.

The twenty-first control unit is configured to control the charging negative switch unit K62- to be turned off after the semiconductor switch unit Q1 and the auxiliary switch unit K52 are turned off and a preset time period has elapsed.

In an example, the control module 30 may further include:
a twenty-second control unit, configured to diagnose the state of the semiconductor switch unit Q1 before the main positive switch unit K61+ is turned off. Particularly, if the semiconductor switch unit Q1 is in the on state, it is determined that the state of the semiconductor switch unit Q1 is normal, and in this case, the charging positive switch unit K62+ may be controlled to be turned off normally; and if the semiconductor switch unit Q1 is in the off state, a fault should be reported, and an emergency power-off procedure should be performed. In a particular example, the emergency power-off procedure may include controlling the charging negative switch unit K62- to be turned off at first, and then controlling the charging positive switch unit K62+ to be turned off.

It should be noted that the twenty-second control unit can ensure that the charging positive switch unit K62+ will not face an abnormal operating conditions of loaded cutting-off, such that the risk such as arcing of the charging positive switch unit K62+ can be further avoided and thereby the electricity safety can be further improved.

In some embodiments, the control module 30 may control the first electrical switch unit K3+ to be turned on according to a power-on request instruction of the high-voltage electrical device. Correspondingly, the control module 30 may include:
a twenty-third control unit, configured to control the auxiliary switch unit K53 to be turned on after receiving the power-on request instruction of the high-voltage electrical device;
a twenty-fourth control unit, configured to control the semiconductor switch unit Q1 to be turned on after the auxiliary switch unit K53 is turned on and a preset time period has elapsed; and
a twenty-fifth control unit, configured to control the first electrical switch unit K3+ to be turned on after the semiconductor switch unit Q1 is turned on.

It should be noted that if the first control switch units include negative control switch units, specific control modes of the control module 30 after receiving the power-on request instruction of the high-voltage electrical device are similar as those of the positive control switch units, and will not be repeated here.

In an example, the control module 30 may further include:
a twenty-sixth control unit, configured to control the first electrical switch unit K3+ to turned off after the first electrical switch unit K3+ is turned on and a preset time period has elapsed.

According to this embodiment, energy losses of the semiconductor switch unit Q1 and a heating phenomenon of the semiconductor switch unit Q1 during a process that the first electrical switch unit K3+ is turned on can be avoided. Therefore, there is no need for additional thermal design and the cost can be reduced.

In an example, the control module 30 may further include:
a twenty-seventh control unit, configured to diagnose the state of the semiconductor switch unit Q1 before the first electrical switch unit K3+ is turned on. Particularly, if the semiconductor switch unit Q1 is in the on state, it is determined that the state of the semiconductor switch unit Q1 is normal, and in this case, the charging positive switch unit K62+ can be controlled to be turned off normally; and if the semiconductor switch unit Q1 is in the off state, a fault should be reported, and a next step should be performed according to a type of the fault.

In some embodiments, the control module 30 may control the first electrical switch unit K3+ to be turned off according to a power-off request instruction of the high-voltage electrical device. Correspondingly, the control module 30 may include:
a twenty-eighth control unit, configured to control the auxiliary switch unit K53 to be turned on after receiving the power-off request instruction of the high-voltage electrical device, which may, in an example, after a power-off request instruction of a high-voltage component of an automobile is received, control the high-voltage component to discharge;
a twenty-ninth control unit, configured to control the semiconductor switch unit Q1 to be turned on after the auxiliary switch unit K53 is turned on and a preset time period has elapsed; and
a thirtieth control unit , configured to control the first electrical switch unit K3+ to turned off after the semiconductor switch unit Q1 is turned on.

It should be noted that if the first control switch units include negative control switch units, specific control modes of the control module 30 after receiving the power-off request instruction of the high-voltage electrical device is similar as those of the positive control switch units, and will not be repeated here.

In an example, the control module 30 may include:
a thirty-first control unit, configured to control the first electrical switch unit K3+ to be turned off after the first electrical switch unit K3+ is turned on and a preset time period has elapsed.

In an example, the control module 30 may include:
a thirty-second control unit, configured to perform diagnose the state of the semiconductor switch unit Q1 before the first electrical switch unit K3+ is turned off. Particularly, if the semiconductor switch unit Q1 is in the on state, it is determined that the state of the semiconductor switch unit Q1 is normal, and in this case, the charging positive switch unit K62+ can be controlled to be turned off normally; and if the semiconductor switch unit Q1 is in the off state, a fault should be reported, and a next step should be performed according to a type of the fault.

Fig. 4 is a schematic structural diagram of another battery high-voltage loop provided by an embodiment of the present application. As shown in Fig. 4, the safety protection circuit may further include a buffer protection module 40.

The buffer protection module 40 is connected in parallel with the semiconductor switch unit Q1. That is, an end of the buffer protection module 40 is connected to the end of the semiconductor switch unit Q1, and another end of the buffer protection module 40 is connected to the another end of the semiconductor switch unit Q1.

The buffer protection module 40 is configured to mitigate an impact on the semiconductor switch unit Q1 caused by a surge current, i.e., can prevent the semiconductor switch unit Q1 from being damaged due to overvoltage or overcurrent. In addition, the buffer protection module 40 can consume excess energies in the circuit of the semiconductor switch unit Q1. Exemplarily, the buffer protection module 40 may be specifically implemented as an RCD absorption circuit, a RC buffer circuit, or a C buffer circuit and the like.

In some embodiments, the safety protection circuit may further include a sampling module. Or it may include a sampling module and an isolation module.

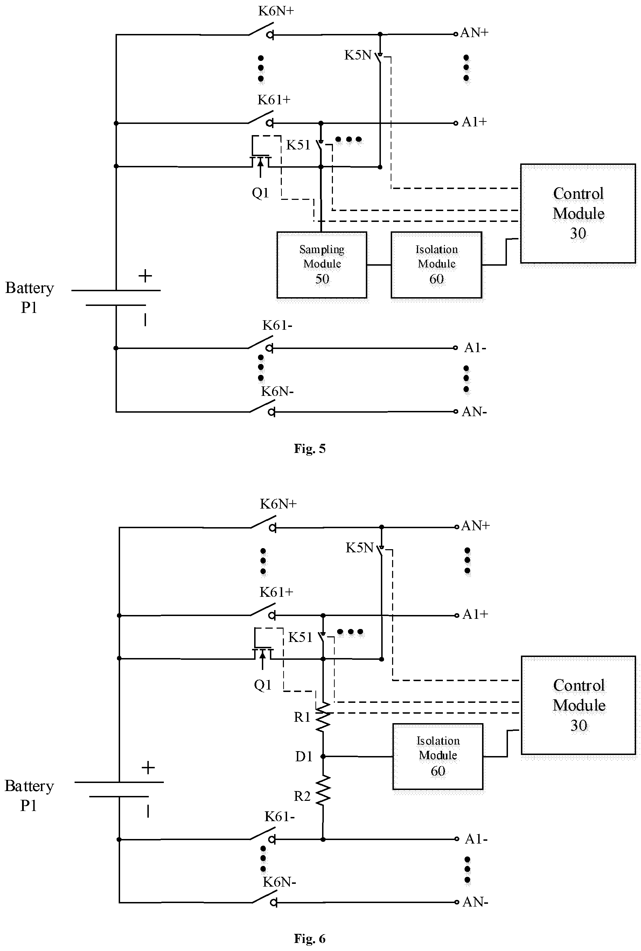

Exemplarily, Fig. 5 is schematic structural diagram of yet another battery high-voltage loop provided by an embodiment of the present application.

As shown in Fig. 5, the safety protection circuit may further include a sampling module 50 and an isolation module 60.

The sampling module 50 is configured to collect a voltage from the another end of the semiconductor switch unit Q1.

The isolation module 60 is configured to realize electrical isolation between other components of the battery high-voltage loop and the control module 30. In an example, the isolation module 60 may be specifically implemented as a transformer including a primary coil and a secondary coil. Alternatively, it may be implemented as a photoelectric sensor, such as an optocoupler. Alternatively, it may be implemented as a capacitor. It should be noted that the isolation module 60 may be implemented as other isolation modules with electrical isolation functions, which is not limited in the embodiments of the present application.

In this case, the control module 30 can receive a voltage sampled by the sampling module 50 via the isolation module 60, so as to monitor the battery high-voltage loop and other components of the safety protection circuit. In an embodiment, when a voltage value of the sampling point is equal to a preset voltage value, it is determined that the target stage ends. For example, under a condition that the target stage is the pre-charging stage, if the first control switch unit is arranged on the positive power transmission lines, the preset voltage value may be the positive electrode voltage of the battery P1. For another example, if the first control switch unit is arranged on the negative power transmission line, the preset voltage value may be a voltage the negative electrode of the battery P1.

In this embodiment, a difference from the battery high-voltage loop shown in Fig. 1 is that voltages of multiple safety protection branches (i.e., a voltage of a first safety protection branch including the auxiliary switch unit K51 and the semiconductor switch unit Q1, the rest being done in the same manner, and a voltage of a *Nth* safety protection branch including the auxiliary switch unit K5N and the semiconductor switch unit Q1) can be monitored using only one sampling module. Therefore, the sampling module 50 can be multiplexed, and the circuit structure can be simplified and the circuit costs can be saved. Fig. 6 is a schematic structural diagram of an exemplary battery high-voltage loop provided by an embodiment of the present application. As shown in Fig. 6, the sampling module 50 includes a first resistor R1 and a second resistor R2.

An end of the first resistor R1 is connected to the another end of the semiconductor switch unit Q1, another end of the first resistor R1 is connected to an end of the second resistor R2, and another end of the second resistor R2 is connected to the negative electrode of the battery P1. The another end of the resistor R1 serves as a signal sampling point D1. Exemplarily, as further shown in Fig. 6, the another end of the second resistor R2 may be connected to the negative electrode of the battery P1 through the main negative switch unit K61-.

Correspondingly, the end of the isolation module 60 is connected to the signal sampling point D1, and the another end of the isolation module 60 is connected to the control module 30.

In an embodiment, during the pre-charging process, the control module 30 is further configured to obtain the sampled voltage value from the signal sampling point D1 via the isolation module 60. And, in the case where the sampled voltage value is equal to a voltage of the positive electrode of the battery, it is determined that the pre-charging process ends.

Based on the same application concept, embodiments of the present application not only provide the safety protection circuits, but also provide corresponding circuit control methods.

The circuit control methods will be described in details below with reference to the accompany drawings.

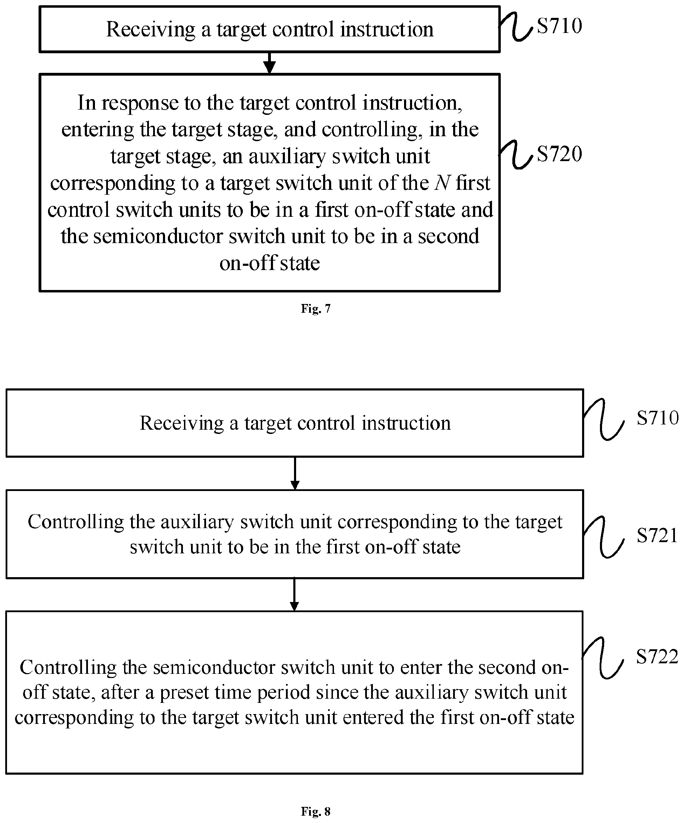

Fig. 7 is a schematic flowchart of a circuit control method provided by an embodiment of the present application Each step of the circuit control method may be performed by the control module 30 shown in the above sections of the embodiments of the present application. As shown in Fig. 7, the circuit control method 700 includes S710 and S720.

S710: receiving a target control instruction.

S720: in response to the target control instruction, entering the target stage, and controlling, in the target stage, an auxiliary switch unit corresponding to a target switch unit of the N first control switch units to be in a first on-off state and the semiconductor switch unit to be in a second on-off state.

The target stage comprises a pre-charging stage corresponding to the target switch unit and/or a switching stage during which an on-off state of the target switch unit is switched.

Under a condition that the target stage comprises the pre-charging stage, the first on-off state is a continuous on state and the second on-off state is an intermittent on state.

Under a condition that the target stage comprises the switching stage, the first on-off state is the continuous on state and the second on-off state is the continuous on state.

In some embodiments, Fig. 8 is a schematic flowchart of another circuit control method provided by an embodiment of the present application. A difference between Fig. 8 and Fig. 7 is that S720 includes S721 and S722.

S721: in response to the target control instruction, entering the target stage, and controlling, in the target stage, the auxiliary switch unit corresponding to the target switch unit to be in the first on-off state.

S722: controlling the semiconductor switch unit to enter the second on-off state, after a preset time period since the auxiliary switch unit corresponding to the target switch unit entered the first on-off state.

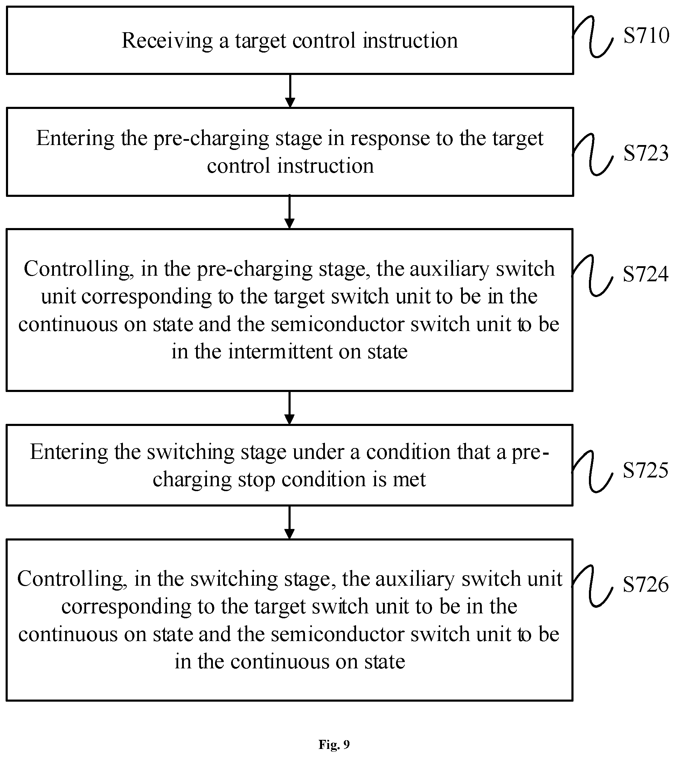

In some embodiments, Fig. 9 is a schematic flowchart of yet another circuit control method provided by an embodiment of the present application. A difference between Fig. 9 and Fig. 7 is that under a condition that the target control instruction is a control instruction to control the target switch unit to be turned on, the target stage includes the pre-charging stage and the switching stage, and S720 includes S723 to S726 accordingly.

S723: entering the pre-charging stage in response to the target control instruction.

S724: controlling, in the pre-charging stage, the auxiliary switch unit corresponding to the target switch unit to be in the continuous on state and the semiconductor switch unit to be in the intermittent on state.

S725: entering the switching stage under a condition that a pre-charging stop condition is met. In an example, the pre-charging stop condition may include the voltage value of the another end of the target switch unit is close to the voltage value of the battery and the current value in the pre-charging loop is close to zero.

S726: controlling, in the switching stage, the auxiliary switch unit corresponding to the target switch unit to be in the continuous on state and the semiconductor switch unit to be in the continuous on state.

In some embodiments, the target control instruction includes at least one of a power-on request instruction of an electrical apparatus, a charging request instruction of the battery, and a power-on request instruction of a high-voltage electrical device.

Under a condition that the target control instruction includes the power-on request instruction of the electrical apparatus, the target switch unit includes a main positive switch unit and/or a main negative switch unit. Under a condition that the auxiliary switch units include an auxiliary switch unit corresponding to the main positive switch unit, the target switch unit may include the main positive switch unit when the power-on request instruction is received. Similarly, under a condition that the auxiliary switch units include an auxiliary switch unit corresponding to the main negative switch unit, the target switch unit may include the main negative switch unit when the power-on request instruction is received.

Under a condition that the target control instruction includes the charging request instruction of the battery, the target switch unit includes a charging positive switch unit and/or a charging negative switch unit. Under a condition that the auxiliary switch units include an auxiliary switch unit corresponding to the charging positive switch unit, the target switch unit may include the charging positive switch unit when the charging request instruction is received. Similarly, under a condition that the auxiliary switch units include an auxiliary switch unit corresponding to the charging negative switch unit, the target switch unit may include the charging negative switch unit when the charging request instruction is received.

Under a condition that the target control instruction includes the power-on request instruction of the high-voltage electrical device, the target switch unit includes a first electrical switch unit and/or a second electrical switch unit. Under a condition that the auxiliary switch units include an auxiliary switch unit corresponding to the first electrical switch unit, the target switch unit may include the first electrical switch unit when the power-on request instruction of the high-voltage electrical device is received. Similarly, under a condition that the auxiliary switch units include an auxiliary switch unit corresponding to the second electrical switch unit, the target switch unit may include the second electrical switch unit when the power-on request instruction of the high-voltage electrical device is received.

In some embodiments, under a condition that the target control instruction is a control instruction to control the target switch unit to be turned off, the target control instruction includes at least one of a power-off request instruction of the electrical apparatus, a charging ending request instruction of the battery, and a power-off request instruction of the high-voltage electrical device.

Under a condition that the target control instruction includes the power-off request instruction of the electrical apparatus, the target switch unit includes a main positive switch unit and/or a main negative switch unit. Under a condition that the auxiliary switch units include an auxiliary switch unit corresponding to the main positive switch unit, the target switch unit may include the main positive switch unit when the power-off request instruction of the electrical apparatus is received. Similarly, under a condition that the auxiliary switch units include an auxiliary switch unit corresponding to the main negative switch unit, the target switch unit may include the main negative switch unit when the power-off request instruction of the electrical apparatus is received.

Under a condition that the target control instruction includes the charging ending request instruction of the battery, the target switch unit includes a charging positive switch unit and/or a charging negative switch unit. Under a condition that the auxiliary switch units include an auxiliary switch unit corresponding to the charging positive switch unit, the target switch unit may include the charging positive switch unit when the charging ending request instruction is received. Similarly, under a condition that the auxiliary switch units include an auxiliary switch unit corresponding to the charging negative switch unit, the target switch unit may include the charging negative switch unit when the charging ending request instruction is received.

Under a condition that the target control instruction includes the power-off request instruction of the high-voltage electrical device, the target switch unit includes a first electrical switch unit and/or a second electrical switch unit. Under a condition that the auxiliary switch units include an auxiliary switch unit corresponding to the first electrical switch unit, the target switch unit may include the first electrical switch unit when the power-off request instruction of the high-voltage electrical device is received. Similarly, under a condition that the auxiliary switch units include an auxiliary switch unit corresponding to the second electrical switch unit, the target switch unit may include the second electrical switch unit when the power-off request instruction of the high-voltage electrical device is received.

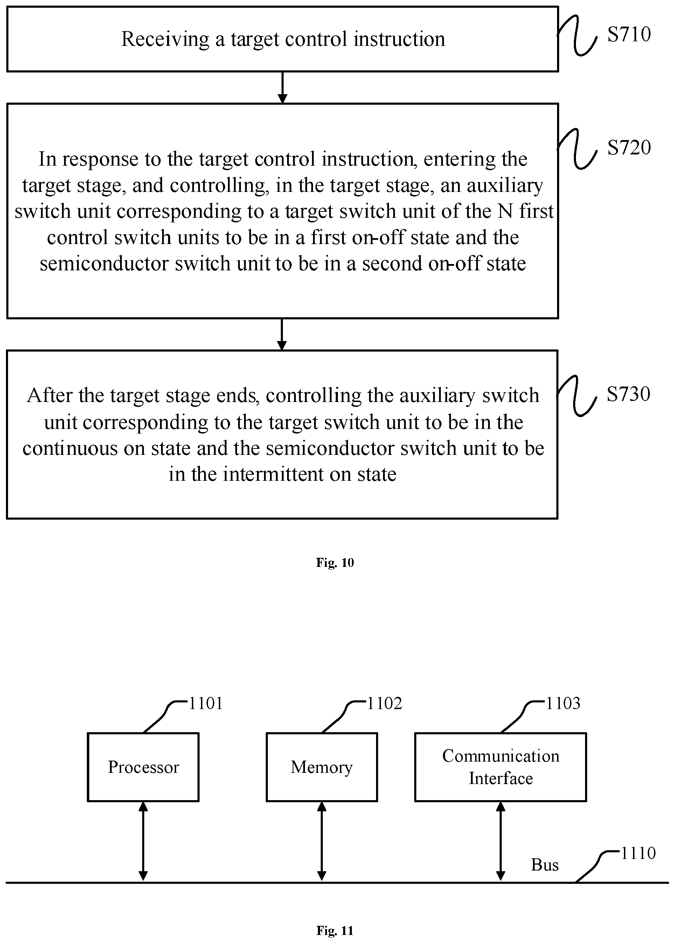

In some embodiments, Fig. 10 is a schematic flowchart of yet another circuit control method provided by an embodiment of the present application. A difference between Fig. 10 and Fig. 7 is that after S720, the method 700 further includes S730.

S730: after the target stage ends, controlling the auxiliary switch unit corresponding to the target switch unit to be in the continuous off state and the semiconductor switch unit to be in the continuous off state.

Other details of the circuit control methods according to the embodiments of the present application are similar as those of the safety protection circuits described above in conjunction with the examples shown in Fig. 2 to Fig. 6 and can achieve corresponding technical effects, which will not be repeated here, for concision of the description.

Fig. 11 illustrates a schematic structural diagram of hardware of a circuit control device, provided by an embodiment of the present application.

The circuit control device may include a processor 1101 and a memory 1102 having computer program instructions stored thereon.

Particularly, the aforementioned processor 1101 may include a Central Processing Unit (CPU), an Application Specific Integrated Circuit (ASIC), or one or more integrated circuits that may be configured to implement of the embodiments of the present application.

The memory 1102 may include a mass memory for data or instructions. For example but not limitation, the memory 1102 may include a Hard Disk Drive (HDD), a floppy disk drive, a flash memory, an optical disk, a magnetooptical disk, a magnetic tape or a Universal Serial Bus (USB) drive, or a combination of two or more of them. In some examples, the memory 1102 may include removable or non-removable (or fixed) media, or the memory 1102 may be a non-volatile solid-state memory. In some embodiments, the memory 1102 may be internal or external to the circuit control device.

In some examples, the memory 1102 may be a Read Only Memory (ROM). In an example, the ROM may be a mask-programmed ROM, a programmable ROM (PROM), an erasable PROM (EPROM), an electrically erasable PROM (EEPROM), an electrically rewritable ROM (EAROM) or flash memory, or a combination of two or more of them.

The memory 1102 may include a read-only memory (ROM), a random access memory (RAM), a magnetic disk storage media device, an optical storage media devices, a flash memory device, an electrical, optical, or other physical/tangible memory storage device. Therefore, generally, the memory may include one or more tangible (non-transitory) computer-readable storage media (e.g., memory devices) encoded with software including computer-executable instructions, and when the software is executed (e.g., by one or more processors), it is operable to perform operations described with reference to the method according to an aspect of the present disclosure.

The processor 1101 reads and executes the computer program instructions stored in the memory 1102, to implement the methods in the embodiments shown in Fig. 7 to Fig. 10, and achieve corresponding technical effects achieved when the methods/steps of the embodiments shown in Fig. 7 to Fig. 10 are executed, which will not be repeated here, for concision of the description.

In an example, the circuit control device may further include a communication interface 1103 and a bus 1110. As shown in Fig. 11, the processor 1101, the memory 1102, and the communication interface 1103 are connected and communicate mutually through the bus 1110.

The communication interface 1103 is mainly used to implement communications between various modules, apparatuses, units and/or devices in the embodiments of the present application.

The bus 1110 may include hardware, software, or both, and couple components of an online data flow accounting device to each other. For example but not limitation, the bus may include an Accelerated Graphics Port (AGP) or other graphics bus, an Extended Industry Standard Architecture (EISA) bus, a Front Side Bus (FSB), a Hyper Transport (HT) interconnection, an Industry Standard Architecture (ISA) bus, an unlimited bandwidth interconnection, a low pin count (LPC) bus, a memory bus, a microchannel architecture (MCA) bus, a peripheral component interconnection PCI bus, a PCI-Express (PCI-X) bus, a Serial Advanced Technology Attachment (SATA) bus, a Video Electronics Standards Association Local (VLB) bus or other suitable bus or a combination of two or more of them. Where appropriate, the bus 1110 may include one or more buses. Although the embodiments of the present application describe and show specific buses, the present disclosure has contemplated any suitable bused or interconnections.

The circuit control device can execute the circuit control methods in the embodiments of the present application, so as to realize the circuit control methods and devices described in conjunction with Fig. 2 to Fig. 10.

In addition, in combination with the circuit control methods of the foregoing embodiments, embodiments of the present application may provide a computer storage medium to implement the methods. The computer storage medium has computer program instructions stored thereon. When the computer program instructions are executed by the processor, any of the circuit control methods of the foregoing embodiments can be implemented.

It should be clarified that the present application is not limited to the specific configurations and process described above and shown in the drawings. For the sake of brevity, a detailed description of known methods is omitted here. In the above embodiments, several specific steps are described and shown as examples. However, the method processes of the present application are not limited to the specific steps described and shown, and those skilled in the art can make various changes, modifications and additions, or change the order between the steps after understanding the present application.

It should be noted that functional blocks shown in the above-mentioned structural block diagrams may be implemented as hardware, software, firmware, or a combination thereof. When implemented in hardware, they can be, for example, electronic circuits, application specific integrated circuits (ASICs), appropriate firmware, plug-ins, function cards, and so on. When implemented in software, elements of the present application are programs or code segments used to perform required tasks. The programs or code segments may be stored in machine-readable media, or transmitted on transmission media or communication links through data signals carried in carrier waves. "Machine-readable media" may include any media that can store or transmit information. Examples of machine-readable media may include electronic circuits, semiconductor memory devices, ROMs, flash memories, erasable ROMs (EROMs), floppy disks, CD-ROMs, optical disks, hard disks, fiber optic media, Radio Frequency (RF) links, and so on. The code segments can be downloaded via a computer network such as the Internet, an intranet, etc.

It should also be noted that, the exemplary embodiments described in the present application describe some methods or systems based on a series of steps and apparatuses. However, the present application is not limited to the order of the above steps. That is to say, the steps may be executed in the order described in the embodiments or in an order different from that in the embodiments, or several steps may be executed simultaneously.

Various aspects of the present disclosure are described with reference to the flowcharts and/or block diagrams of the methods, apparatuses, devices, and computer program products according to the embodiments of the present disclosure. It should be understood that each block in the flowcharts and/or block diagrams and combinations of blocks in the flowcharts and/or block diagrams can be implemented by computer program instructions. These computer program instructions can be provided to a processor of a general-purpose computer, a special-purpose computer, or other programmable data processing apparatus, to produce a machine that causes these instructions executed by the processor of the computer or other programmable data processing apparatus to enable the implementation of the functions/actions specified in one or more blocks of the flowcharts and/or block diagrams. Such processor may be, but is not limited to, a general-purpose processor, a dedicated processor, a special application processor, or a field programmable logic circuit. It can also be understood that each block in the block diagrams and/or flowcharts and a combination of the blocks in the block diagrams and/or flowcharts may be implemented by dedicated hardware that performs specified functions or actions, or may be implemented by a combination of the dedicated hardware and the computer instructions.

The above embodiments are only specific implementations of the present application. Those skilled in the art can clearly understand that, for convenience and conciseness of the description, specific working processes of the above-described systems, modules and units may refer to corresponding processes in the foregoing method embodiments, which will not be repeated here. It should be understood that the protection scope of the present application is not limited to this. Any person skilled in the art can easily conceive of equivalent changes or substitutions within the technical scope disclosed in the present application, which should be covered within the protection scope of the present application. The present application is not limited to the specific embodiments disclosed herein, instead, it can include all technical solutions that fall within the scope of the claims.

## Claims

1. A safety protection circuit, comprising:
N auxiliary switch units (K51... K5N), in a one-to-one association with N first control switch units (K61+ ... K6N+ or K61- ... K6N-), wherein the N first control switch units (K61+ ... K6N+ or K61- ... K6N-) are arranged on power transmission lines of a battery (P1), and N is an integer greater than or equal to 2;
a semiconductor switch unit (Q1), connected to each first control switch unit (K61+ ... K6N+ or K61- ... K6N-) via an auxiliary switch unit (K51...K5N) corresponding to the first control switch unit (K61+ ... K6N+ or K61- ... K6N-);
a control module (30), configured to
receive a target control instruction (S710);
enter a target stage, in response to the target control instruction (S720); and
in the target stage, control an auxiliary switch unit corresponding to a target switch unit of the N first control switch units to be in a first on-off state, and control the semiconductor switch unit to be in a second on-off state (S720),
wherein the target stage comprises a pre-charging stage corresponding to the target switch unit and/or a switching stage during which an on-off state of the target switch unit is switched;
under a condition that the target stage comprises the pre-charging stage, the first on-off state is a continuous on state and the second on-off state is an intermittent on state;
the safety protection circuit is **characterized in that**:
under a condition that the target stage comprises the switching stage, the first on-off state is the continuous on state and the second on-off state is the continuous on state;
the N auxiliary switch units (K51 ... K5N) are mechanical switches; and
the control module (30) is configured to, during the switching stage, firstly control the auxiliary switch unit corresponding to the target switch unit to enter the continuous on state, control the semiconductor switch unit to enter the continuous on state after the target switch unit corresponding to the target switch unit enters the continuous on state, and control the target switch unit to switch from an off state to an on state or switch from the on state to the off state after both the auxiliary switch unit corresponding to the target switch unit and the semiconductor switch unit enter the continuous on state.

2. The circuit of claim 1, wherein the circuit further comprises:
a buffer protection module (40), connected in parallel with the semiconductor switch unit (Q1).

3. The circuit of any one of claims lor 2, wherein
the power transmission lines of the battery (P1) comprise positive power transmission lines of the battery (P1) and/or negative power transmission lines of the battery (P1);
under a condition that the power transmission lines of the battery (P1) comprise the positive power transmission lines of the battery (P1), the *N* first control switch units (K61+ ... K6N+) comprise at least two of a main positive switch unit (K61+), a charging positive switch unit (K62+), and a first electrical switch unit (K63+);
under a condition that the power transmission lines of the battery (P1) comprise the negative power transmission lines of the battery (P1), the *N* first control switch units (K61- ... K6N-) comprise at least two of a main negative switch unit (K61-), a charging negative switch unit (K62-), and a second electrical switch unit;
wherein an end of the main positive switch unit (K61+) is connected to a positive electrode (+) of the battery (P1) and another end of the main positive switch unit (K61+) is connected to a positive connecting port of a motor;
an end of the charging positive switch unit (K62+) is connected to the positive electrode (+) of the battery (P1) and another end of the charging positive switch unit (K62+) is connected to a positive charging port;
an end of the first electrical switch unit (K63+) is connected to the positive electrode (+) of the battery (P1) and another end of the first electrical switch unit (K63+) is connected to a high-voltage output port;
an end of the main negative switch unit (K61-) is connected to a negative electrode (-) of the battery (P1) and another end of the main negative switch unit (K61-) is connected to a negative connecting port of the motor;
an end of the charging negative switch unit (K62-) is connected to the negative electrode (-) of the battery (P1) and another end of the charging negative switch unit (K62-) is connected to a negative charging port;
an end of the second electrical switch unit is connected to the negative electrode (-) of the battery (P1) and another end of the first electrical switch unit (K63+) is connected to the high-voltage output port.

4. A circuit control method, applied to the safety protection circuit of any one of claims 1 to 3, the method comprising:
(S710) receiving, by the control module (30), a target control instruction;
(S720) the control module entering a target stage, in response to the target control instruction; and
(S720) controlling, by the control module (30), in the target stage, an auxiliary switch unit corresponding to a target switch unit of the N first control switch units to be in a first on-off state and the semiconductor switch unit to be in a second on-off state,
wherein the target stage comprises a pre-charging stage corresponding to the target switch unit and/or a switching stage during which an on-off state of the target switch unit is switched;
under a condition that the target stage comprises the pre-charging stage, the first on-off state is a continuous on state and the second on-off state is an intermittent on state;
under a condition that the target stage comprises the switching stage, the first on-off state is the continuous on state and the second on-off state is the continuous on state; and
the method further comprising: during the switching stage, firstly controlling the auxiliary switch unit corresponding to the target switch unit to enter the continuous on state, controlling the semiconductor switch unit to enter the continuous on state after the target switch unit corresponding to the target switch unit enters the continuous on state, and controlling the target switch unit to switch from an off state to an on state or switch from the on state to the off state after both the auxiliary switch unit corresponding to the target switch unit and the semiconductor switch unit enter the continuous on state.

5. The method of claim 4, wherein after controlling, by the control module, the auxiliary switch unit corresponding to the target switch unit of the N first control switch units to be in the first on-off state and the semiconductor switch unit to be in the second on-off state (S720), the method further comprises:
after the target stage ends, controlling, by the control module, the auxiliary switch unit corresponding to the target switch unit to be in the continuous on state and the semiconductor switch unit to be in the intermittent on state.

6. The method of claim 4, wherein controlling, by the control module, the auxiliary switch unit corresponding to the target switch unit of the *N* first control switch units to be in the first on-off state and the semiconductor switch unit to be in the second on-off state (S720) comprises:
controlling, by the control module, the auxiliary switch unit corresponding to the target switch unit to enter the first on-off state (S721); and
controlling, by the control module, the semiconductor switch unit to enter the second on-off state, after a preset time period since the auxiliary switch unit corresponding to the target switch unit entered the first on-off state (S722).

7. The method of claim 4, wherein
under a condition that the target control instruction is a control instruction to control the target switch unit to be turned on, the target stage comprises the pre-charging stage and the switching stage; and
the control module entering the target stage, in response to the target control instruction, and in the target stage, controlling, by the control module, the auxiliary switch unit corresponding to the target switch unit of the N first control switch units to be in the first on-off state and the semiconductor switch unit to be in the second on-off state (S720) comprises:
the control module entering the pre-charging stage, in response to the target control instruction (S723);
controlling, by the control module, in the pre-charging stage, the auxiliary switch unit corresponding to the target switch unit to be in the continuous on state and the semiconductor switch unit to be in the intermittent on state (S724);
the control module entering the switching stage, under a condition that a pre-charging stop condition is met (S725); and
controlling, by the control module, in the switching stage, the auxiliary switch unit corresponding to the target switch unit to be in the continuous on state and the second on-off state to be the continuous on state (S726).

8. The method of claim 7, wherein
the target control instruction comprises at least one of a power-on request instruction of an electrical apparatus, a charging request instruction of the battery (P1), and a power-on request instruction of a high-voltage electrical device;
under a condition that the target control instruction comprises the power-on request instruction of the electrical apparatus, the target switch unit comprises a main positive switch (K61+) unit and/or a main negative switch unit (K61-);
under a condition that the target control instruction comprises the charging request instruction of the battery (P1), the target switch unit comprises a charging positive switch unit (K62+) and/or a charging negative switch unit (K62-); and
under a condition that the target control instruction comprises the power-on request instruction of the high-voltage electrical device, the target switch unit comprises a first electrical switch unit (K63+) and/or a second electrical switch unit.

9. The method of claim 4, wherein
under a condition that the target control instruction is a control instruction to control the target switch unit to be turned off, the target control instruction comprises at least one of a power-off request instruction of an electrical apparatus, a charging ending request instruction of the battery (P1), and a power-off request instruction of a high-voltage electrical device;
under a condition that the target control instruction comprises the power-off request instruction of the electrical apparatus, the target switch unit comprises a main positive switch (K61+) and/or a main negative switch unit (K61-);
under a condition that the target control instruction comprises the charging ending request instruction of the battery (P1), the target switch unit comprises a charging positive switch unit (K62+) and/or a charging negative switch unit (K62-); and
under a condition that the target control instruction comprises the power-off request instruction of the high-voltage electrical device, the target switch unit comprises a first electrical switch unit (K63+) and/or a second electrical switch unit.

10. A battery high-voltage loop, comprising:
the safety protection circuit of any one of claims 1 to 3; and
first control switch units (K61+ ... K6N+ or K61- ... K6N-), wherein the first control switch units (K61+ ... K6N+ or K61- ... K6N-) are arranged on the power transmission lines of the battery (P1).

11. An electrical apparatus, comprising:
the safety protection circuit of any one of claims 1 to 3;
first control switch units (K61+ ... K6N+ or K61- ... K6N-), wherein the first control switch units (K61+ ... K6N+ or K61- ... K6N-) are arranged on the power transmission lines of the battery (P1); and
the battery (P1).

12. A circuit control device, **characterized in that** the device comprises: a processor (1101) and a memory (1102) having computer program instructions stored thereon;
wherein the processor (1101) reads and executes the computer program instructions to implement the circuit control method of any one of claims 4 to 9.

13. A computer storage medium, **characterized in that** the computer storage medium has computer program instructions stored thereon, which when executed by a processor (1101), cause the circuit control method of any one of claims 4 to 9 to be implemented.

## Patentansprüche

1. Eine Sicherheitsschutzschaltung, umfassend:
N Hilfsschalteinheiten (K51... K5N), in einer Eins-zu-eins-Zuordnung mit N ersten Steuerschalteinheiten (K61+ ... K6N+ oder K61- ... K6N-), wobei die N ersten Steuerschalteinheiten (K61+ ... K6N+ oder K61- ... K6N-) auf Stromübertragungsleitungen einer Batterie (P1) angeordnet sind und N eine ganze Zahl größer oder gleich 2 ist;
eine Halbleiterschalteinheit (Q1), die über eine Hilfsschalteinheit (K51 ...K5N), die der ersten Steuerschalteinheit (K61+ ... K6N+ oder K61-) entspricht, mit jeder ersten Steuerschalteinheit (K61 + ... K6N+ oder K61- ... K6N-) verbunden ist;
ein Steuermodul (30), konfiguriert:
um eine Zielsteueranweisung zu empfangen (S710);
als Reaktion auf die Zielsteueranweisung in eine Zielstufe einzutreten (S720); und
in der Zielstufe eine Hilfsschalteinheit, die einer Zielschalteinheit der N ersten Steuerschalteinheiten entspricht, so zu steuern, dass sie sich in einem ersten Ein-Aus-Zustand befindet, und die Halbleiterschalteinheit so zu steuern, dass sie sich in einem zweiten Ein-Aus-Zustand befindet (S720),
wobei die Zielstufe eine Vorladestufe, die der Zielschalteinheit entspricht, und/oder eine Schaltstufe, während der ein Ein-Aus-Zustand der Zielschalteinheit geschaltet wird, umfasst;
unter der Bedingung, dass die Zielstufe die Vorladestufe umfasst, der erste Ein-Aus-Zustand ein kontinuierlicher Ein-Zustand ist und der zweite Ein-Aus-Zustand ein intermittierender Ein-Zustand ist;
die Sicherheitsschutzschaltung **dadurch gekennzeichnet ist, dass**:
unter der Bedingung, dass die Zielstufe die Schaltstufe umfasst, der erste Ein-Aus-Zustand der kontinuierliche Ein-Zustand ist und der zweite Ein-Aus-Zustand der kontinuierliche Ein-Zustand ist;
die N Hilfsschalteinheiten (K51... K5N) mechanische Schalter sind; und
das Steuermodul (30) so konfiguriert ist, dass es während der Schaltstufe zunächst die Hilfsschalteinheit, die der Zielschalteinheit entspricht, steuert, um in den kontinuierlichen Ein-Zustand einzutreten, die Halbleiterschalteinheit so zu steuern, dass sie in den kontinuierlichen Ein-Zustand eintritt, nachdem die Zielschalteinheit, die der Zielschalteinheit entspricht, in den kontinuierlichen Ein-Zustand eintritt, und die Zielschalteinheit steuert, um von einem Aus-Zustand in einen Ein-Zustand umzuschalten oder vom Ein-Zustand in den Aus-Zustand umzuschalten, nachdem sowohl die Hilfsschalteinheit, die der Zielschalteinheit entspricht, als auch die Halbleiterschalteinheit in den kontinuierlichen Ein-Zustand eintreten.

2. Schaltung nach Anspruch 1, wobei die Schaltung ferner umfasst:
ein Pufferschutzmodul (40), das parallel zur Halbleiterschalteinheit (Q1) geschaltet ist.

3. Schaltung nach einem der Ansprüche 1 oder 2, wobei
die Leistungsübertragungsleitungen der Batterie (P1) positive Leistungsübertragungsleitungen der Batterie (P1) und/oder negative Leistungsübertragungsleitungen der Batterie (P1) umfassen;
unter der Bedingung, dass die Leistungsübertragungsleitungen der Batterie (P1) die positiven Leistungsübertragungsleitungen der Batterie (P1) umfassen, die N ersten Steuerschalteinheiten (K61+ ... K6N+) mindestens zwei von einer positiven Hauptschalteinheit (K61+), einer positiven Ladeschalteinheit (K62+) und einer ersten elektrischen Schalteinheit (K63+) umfassen;
unter der Bedingung, dass die Leistungsübertragungsleitungen der Batterie (P1) die negativen Leistungsübertragungsleitungen der Batterie (P1) umfassen, die N ersten Steuerschalteinheiten (K61- ... K6N-) mindestens zwei von einer negativen Hauptschalteinheit (K61-), einer negativen Ladeschalteinheit (K62-) und einer zweiten elektrischen Schalteinheit umfassen;
wobei ein Ende der positiven Hauptschalteinheit (K61+) mit einer positiven Elektrode (+) der Batterie (P1) verbunden ist und ein anderes Ende der positiven Hauptschalteinheit (K61+) mit einem positiven Verbindungsanschluss eines Motors verbunden ist;
ein Ende der positiven Ladeschalteinheit (K62+) mit der positiven Elektrode (+) der Batterie (P1) verbunden ist und ein anderes Ende der positiven Ladeschalteinheit (K62+) mit einem positiven Ladeanschluss verbunden ist;
ein Ende der ersten elektrischen Schalteinheit (K63+) mit der positiven Elektrode (+) der Batterie (P1) verbunden ist und ein anderes Ende der ersten elektrischen Schalteinheit (K63+) mit einem Hochspannungsausgangsanschluss verbunden ist;
ein Ende der negativen Hauptschalteinheit (K61-) mit einer negativen Elektrode (-) der Batterie (P1) verbunden ist und ein anderes Ende der negativen Hauptschalteinheit (K61-) mit einem negativen Anschlussanschluss des Motors verbunden ist;
ein Ende der negativen Ladeschalteinheit (K62-) mit der negativen Elektrode (-) der Batterie (P1) verbunden ist und ein anderes Ende der negativen Ladeschalteinheit (K62-) mit einem negativen Ladeanschluss verbunden ist;
ein Ende der zweiten elektrischen Schalteinheit mit der negativen Elektrode (-) der Batterie (P1) verbunden ist und ein anderes Ende der ersten elektrischen Schalteinheit (K63+) mit dem Hochspannungsausgangsanschluss verbunden ist.

4. Schaltungssteuerungsverfahren, angewendet auf die Sicherheitsschutzschaltung nach einem der Ansprüche 1 bis 3, wobei das Verfahren Folgendes umfasst:
(S710) Empfangen einer Zielsteueranweisung durch das Steuermodul (30);
(S720) Eintritt des Steuermoduls in eine Zielstufe als Reaktion auf die Zielsteueranweisung; und
(S720) Steuern, durch das Steuermodul (30), in der Zielstufe, dass sich eine Hilfsschalteinheit, die einer Zielschalteinheit der N ersten Steuerschalteinheiten entspricht, in einem ersten Ein-Aus-Zustand befindet, und sich die Halbleiterschalteinheit in einem zweiten Ein-Aus-Zustand befindet,
wobei die Zielstufe eine Vorladestufe, die der Zielschalteinheit entspricht, und/oder eine Schaltstufe umfasst, während der ein Ein-Aus-Zustand der Zielschalteinheit geschaltet wird;
unter der Bedingung, dass die Zielstufe die Vorladestufe umfasst, der erste Ein-Aus-Zustand ein kontinuierlicher Ein-Zustand ist und der zweite Ein-Aus-Zustand ein intermittierender Ein-Zustand ist;
unter der Bedingung, dass die Zielstufe die Schaltstufe umfasst, der erste Ein-Aus-Zustand der kontinuierliche Ein-Zustand ist und der zweite Ein-Aus-Zustand der kontinuierliche Ein-Zustand ist; und
wobei das Verfahren ferner umfasst: während der Schaltphase zunächst Steuern der Hilfsschalteinheit, die der Zielschalteinheit entspricht, um in den kontinuierlichen Ein-Zustand einzutreten, Steuern der Halbleiterschalteinheit, um in den kontinuierlichen Ein-Zustand eintritt, nachdem die Zielschalteinheit, die der Zielschalteinheit entspricht in den kontinuierlichen Ein-Zustand eintritt, und Steuern der Zielschalteinheit, um von einem Aus-Zustand in einen Ein-Zustand umzuschalten oder vom Ein-Zustand in den Aus-Zustand umzuschalten, nachdem sowohl die Hilfsschalteinheit, die der Zielschalteinheit entspricht, als auch die Halbleiterschalteinheit in den kontinuierlichen Ein-Zustand eintreten.

5. Verfahren nach Anspruch 4, wobei nach dem Steuern, durch das Steuermodul, dass sich eine Hilfsschalteinheit, die einer Zielschalteinheit der N ersten Steuerschalteinheiten entspricht, in einem ersten Ein-Aus-Zustand befindet, und sich die Halbleiterschalteinheit in einem zweiten Ein-Aus-Zustand befindet (S720), das Verfahren ferner umfasst:
nach Ende der Zielstufe, Steuern, durch das Steuermodul, dass sich die Hilfsschalteinheit, die der Zielschalteinheit entspricht, im kontinuierlichen Ein-Zustand befindet und dass die Halbleiterschalteinheit im intermittierenden Ein-Zustand ist.

6. Verfahren nach Anspruch 4, wobei Steuern, durch das Steuermodul, dass sich eine Hilfsschalteinheit, die einer Zielschalteinheit der N ersten Steuerschalteinheiten entspricht, in einem ersten Ein-Aus-Zustand befindet, und sich die Halbleiterschalteinheit in einem zweiten Ein-Aus-Zustand befindet (S720), umfasst:
Steuern der Hilfsschalteinheit, die der Zielschalteinheit entspricht, durch das Steuermodul, um in den ersten Ein-Aus-Zustand einzutreten (S721); und
Steuern, durch das Steuermodul, dass die Halbleiterschalteinheit in den zweiten Ein-Aus-Zustand eintritt, nach einer voreingestellten Zeitspanne, seit die Hilfsschalteinheit, die der Zielschalteinheit entspricht, in den ersten Ein-Aus-Zustand eingetreten ist (S722).

7. Verfahren nach Anspruch 4, wobei
unter der Bedingung, dass die Zielsteueranweisung eine Steueranweisung, um die Zielschalteinheit zum Einschalten zu steuern, die Zielstufe die Vorladestufe und die Schaltstufe umfasst; und
Eintritt des Steuermoduls in eine Zielstufe als Reaktion auf die Zielsteueranweisung und Steuern, durch das Steuermodul, in der Zielstufe, dass sich eine Hilfsschalteinheit, die einer Zielschalteinheit der N ersten Steuerschalteinheiten entspricht, in einem ersten Ein-Aus-Zustand befindet, und sich die Halbleiterschalteinheit in einem zweiten Ein-Aus-Zustand befindet (S720), umfasst:
Eintritt des Steuermoduls in die Vorladephase, als Reaktion auf die Zielsteueranweisung (S723);
Steuern, durch das Steuermodul, in der Vorladestufe, dass sich die Hilfsschalteinheit, die der Zielschalteinheit entspricht, im kontinuierlichen Ein-Zustand befindet und dass sich die Halbleiterschalteinheit im intermittierenden Ein-Zustand befindet (S724);
Eintritt des Steuermoduls in die Schaltstufe unter der Bedingung, dass eine Vorlade-Stoppbedingung erfüllt ist (S725); und
Steuern, durch das Steuermodul, in der Schaltstufe, dass sich die Hilfsschalteinheit, die der Zielschalteinheit entspricht, im kontinuierlich befindet und dass der zweite Ein-Aus-Zustand der kontinuierlicher Ein-Zustand ist (S726).

8. Verfahren nach Anspruch 7, wobei
die Zielsteueranweisung mindestens eine von einer Einschaltanforderungsanweisung eines elektrischen Geräts, einer Ladeanforderungsanweisung der Batterie (P1) und einer Einschaltanforderungsanweisung eines elektrischen Hochspannungsgeräts umfasst;
unter der Bedingung, dass die Zielsteueranweisung die Einschaltanforderungsanweisung des elektrischen Geräts umfasst, die Zielschalteinheit eine positive Hauptschalteinheit (K61+) und/oder eine negative Hauptschalteinheit (K61-) umfasst;
unter der Bedingung, dass die Zielsteueranweisung die Ladeanforderungsanweisung der Batterie (P1) umfasst, die Zielschalteinheit positive Ladeschalteinheit (K62+) und/oder eine negative Ladeschalteinheit (K62-) umfasst; und
unter der Bedingung, dass die Zielsteueranweisung die Einschaltanforderungsanweisung des elektrischen Hochspannungsgeräts umfasst, die Zielschalteinheit eine erste elektrische Schalteinheit (K63+) und/oder eine zweite elektrische Schalteinheit umfasst.

9. Verfahren nach Anspruch 4, wobei
unter der Bedingung, dass die Zielsteueranweisung eine Steueranweisung, um die Zielschalteinheit zum Ausschalten zu steuern, die Zielsteueranweisung mindestens eine Ausschaltanforderungsanweisung eines elektrischen Geräts und eine Anforderungsanweisung zum Beenden des Ladevorgangs Batterie (P1) und eine Ausschaltanforderungsanweisung eines elektrischen Hochspannungsgeräts, umfasst;
unter der Bedingung, dass die Zielsteueranweisung die Ausschaltanforderungsanweisung des elektrischen Geräts umfasst, die Zielschalteinheit eine positive Hauptschalteinheit (K61+) und/oder eine negative Hauptschalteinheit (K61-) umfasst;
unter der Bedingung, dass die Zielsteueranweisung die Ladebeendigungsanforderungsanweisung der Batterie (P1) umfasst, die Zielschalteinheit eine positive Ladeschalteinheit (K62+) und/oder eine negative Ladeschalteinheit (K62-) umfasst; Und
unter der Bedingung, dass die Zielsteueranweisung die Ausschaltanforderungsanweisung des elektrischen Hochspannungsgeräts umfasst, die Zielschalteinheit eine erste elektrische Schalteinheit (K63+) und/oder eine zweite elektrische Schalteinheit umfasst.

10. Batterie-Hochspannungskreislauf, umfassend:
die Sicherheitsschutzschaltung nach einem der Ansprüche 1 bis 3; und
erste Steuerschalteinheiten (K61+ ... K6N+ oder K61- ... K6N-), wobei die ersten Steuerschalteinheiten (K61+ ... K6N+ oder K61- ... K6N-) auf den Leistungübertragungsleitungen der Batterie (P1) angeordnet sind.

11. Elektrisches Gerät, umfassend:
die Sicherheitsschutzschaltung nach einem der Ansprüche 1 bis 3;
erste Steuerschalteinheiten (K61+ ... K6N+ oder K61- ... K6N-), wobei die ersten Steuerschalteinheiten (K61+ ... K6N+ oder K61- ... K6N-) auf den Leistungübertragungsleitungen der Batterie (P1) angeordnet sind; und
die Batterie

12. Schaltungssteuergerät, **dadurch gekennzeichnet, dass** das Gerät umfasst: einen Prozessor (1101) und einen Speicher (1102), auf dem Computerprogrammanweisungen gespeichert sind;
wobei der Prozessor (1101) die Computerprogrammanweisungen liest und ausführt, um das Schaltungssteuerverfahren nach einem der Ansprüche 4 bis 9 zu implementieren.

13. Computerspeichermedium, **dadurch gekennzeichnet, dass** auf dem Computerspeichermedium Computerprogrammanweisungen gespeichert sind, die bei Ausführung durch einen Prozessor (1101) die Implementierung des Schaltungssteuerverfahrens nach einem der Ansprüche 4 bis 9 bewirken.

## Revendications

1. Circuit protecteur de sécurité, comprenant :
*N* unités de commutation auxiliaire (K51...K5N), dans une association biunivoque avec *N* premières unités de commutation de commande (K61+ ... K6N+ ou K61-... K6N-), dans lequel les *N* premières unités de commutation de commande (K61+ ... K6N+ ou K61-... K6N-) sont disposés sur les lignes de transmission d'énergie d'une batterie (P1), où *N* est un entier supérieur ou égal à 2 ;
une unité de commutation à semi-conducteurs (Q1), connectée à chaque première unité de commutation de commande (K61+ ... K6N+ ou K61-... K6N-) à travers une unité de commutation auxiliaire (K51...K5N) correspondant à la première unité de commutation de commande (K61+ ... K6N+ ou K61-... K6N-) ;
un module de commande (30), configuré pour
recevoir une instruction de commande cible (S710) ;
entrer dans une phase cible, en réponse à l'instruction de commande cible (S720) ; et
pendant la phase cible, commander une unité de commutation auxiliaire correspondant à une unité de commutation cible des *N* premières unités de commutation de commande à passer à un premier état activé-désactivé, et commander l'unité de commutation à semi-conducteur à passer à un deuxième état activé-désactivé (S720),
dans lequel la phase cible comprend une phase de précharge correspondant à l'unité de commutation cible et/ou une phase de commutation pendant laquelle un état activé-désactivé de l'unité de commutation cible est commuté ;
à condition que la phase cible comprenne la phase de précharge, le premier état activé-désactivé est un état activé continu et le deuxième état activé-désactivé est un état activé intermittent ;
le circuit protecteur de sécurité se **caractérise en ce que** :
à condition que la phase cible comprenne la phase de commutation, le premier état activé-désactivé est l'état activé continu et le deuxième état activé-désactivé est l'état activé continu ;
les *N* unités de commutation auxiliaires (K51...K5N) sont des commutateurs mécaniques ; et
le module de commande (30) est configuré pour, pendant la phase de commutation, commander d'abord l'unité de commutation auxiliaire correspondant à l'unité de commutation cible à passer à l'état activé continu, commander l'unité de commutation à semi-conducteurs à passer à l'état activé continu après que l'unité de commutation cible correspondant à l'unité de commutation cible a passé à l'état activé continu, et commander l'unité de commutation cible à passer d'un état désactivé à un état activé ou passer de l'état activé à l'état désactivé après que l'unité de commutation auxiliaire correspondant à l'unité de commutation cible et l'unité de commutation à semi-conducteur ont tous passé à l'état activé continu.

2. Circuit selon la revendication 1, dans lequel le circuit comprend en outre :
un module de protection tampon (40), connecté en parallèle à l'unité de commutation à semi-conducteurs (Q1).

3. Circuit selon l'une quelconque des revendications 1 ou 2, dans lequel,
les lignes de transmission d'énergie de la batterie (P1) comprennent des lignes de transmission de puissance positive de la batterie (P1) et/ou des lignes de transmission de puissance négative de la batterie (P1) ;
à condition que les lignes de transmission de puissance de la batterie (P1) comprennent les lignes de transmission de puissance positive de la batterie (P1), les *N* premières unités de commutation de commande (K61+ ... K6N+) comprennent au moins deux parmi une unité de commutation positive principale (K61+), une unité de commutation positive de recharge (K62+) et une première unité de commutation électrique (K63+) ;
à condition que les lignes de transmission de puissance de la batterie (P1) comprennent les lignes de transmission de puissance négative de la batterie (P1), les *N* premières unités de commutation de commande (K61- ... K6N-) comprennent au moins deux parmi une unité de commutation négative principale (K61-), une unité de commutation négative de recharge (K62-) et une deuxième unité de commutation électrique ;
dans lequel une extrémité de l'unité de commutation positive principale (K61+) est connectée à une électrode positive (+) de la batterie (P1) et une autre extrémité de l'unité de commutation positive principale (K61+) est connectée à un port de connexion positif d'un moteur ;
une extrémité de l'unité de commutation positive de recharge (K62+) est connectée à l'électrode positive (+) de la batterie (P1) et une autre extrémité de l'unité de commutation positive de recharge (K62+) est connectée à un port de recharge positif ;
une extrémité de la première unité de commutation électrique (K63+) est connectée à l'électrode positive (+) de la batterie (P1) et une autre extrémité de la première unité de commutation électrique (K63+) est connectée à un port de sortie à haute tension ;
une extrémité de l'unité de commutation négative principale (K61-) est connectée à une électrode négative (-) de la batterie (P1) et une autre extrémité de l'unité de commutation négative principale (K61-) est connectée à un port de connexion négatif du moteur ;
une extrémité de l'unité de commutation négative de recharge (K62-) est connectée à l'électrode négative (-) de la batterie (P1) et une autre extrémité de l'unité de commutation négative de recharge (K62-) est connectée à un port de recharge négative ;
une extrémité de la deuxième unité de commutation électrique est connectée à l'électrode négative (-) de la batterie (P1) et une autre extrémité de la première unité de commutation électrique (K63+) est connectée au port de sortie à haute tension.

4. Procédé de commande de circuit, applicable au circuit protecteur de sécurité selon l'une quelconque des revendications 1 à 3, le procédé comprenant :
(S710) recevoir, par le module de commande (30), une instruction de commande cible ;
(S720) le module de commande entrant dans une phase cible, en réponse à l'instruction de commande cible ; et
(S720) commander, par le module de commande (30), pendant la phase cible, une unité de commutation auxiliaire correspondant à une unité de commutation cible des N premières unités de commutation de commande à passer à un premier état activé-désactivé, et commander l'unité de commutation à semi-conducteur à passer à un deuxième état activé-désactivé,
dans lequel la phase cible comprend une phase de précharge correspondant à l'unité de commutation cible et/ou une phase de commutation pendant laquelle un état activé-désactivé de l'unité de commutation cible est commuté ;
à condition que la phase cible comprenne la phase de précharge, le premier état activé-désactivé est un état activé continu et le deuxième état activé-désactivé est un état activé intermittent ;
à condition que la phase cible comprenne la phase de commutation, le premier état activé-désactivé est l'état activé continu et le deuxième état activé-désactivé est l'état activé continu ; et
le procédé comprenant en outre : pendant la phase de commutation, commander d'abord l'unité de commutation auxiliaire correspondant à l'unité de commutation cible à passer à l'état activé continu, commander l'unité de commutation à semi-conducteurs à passer à l'état activé continu après que l'unité de commutation cible correspondant à l'unité de commutation cible a passé à l'état activé continu, et commander l'unité de commutation cible à passer d'un état désactivé à un état activé ou passer de l'état activé à l'état désactivé après que l'unité de commutation auxiliaire correspondant à l'unité de commutation cible et l'unité de commutation à semi-conducteur ont tous passé à l'état activé continu.

5. Procédé selon la revendication 4, dans lequel après l'étape de commander, par le module de commande, l'unité de commutation auxiliaire correspondant à l'unité de commutation cible des *N* premières unités de commutation de commande à passer au premier état activé-désactivé, et commander l'unité de commutation à semi-conducteur à passer au deuxième état activé-désactivé (S720), le procédé comprend en outre :
après la phase cible, commander, par le module de commande, l'unité de commutation auxiliaire correspondant à l'unité de commutation cible à passer à l'état activé continu, et commander l'unité de commutation à semi-conducteur à passer à l'état activé intermittent.

6. Procédé selon la revendication 4, dans lequel l'étape de commander, par le module de commande, l'unité de commutation auxiliaire correspondant à l'unité de commutation cible des *N* premières unités de commutation de commande à passer au premier état activé-désactivé, et commander l'unité de commutation à semi-conducteur à passer au deuxième état activé-désactivé (S720) comprend :
commander, par le module de commande, l'unité de commutation auxiliaire correspondant à l'unité de commutation cible à passer au premier état activé-désactivé (S721) ; et
commander, par le module de commande, l'unité de commutation à semi-conducteur à passer au deuxième état activé-désactivé, après une durée prédéfinie depuis l'unité de commutation auxiliaire correspondant à l'unité de commutation cible a passé au premier état activé-désactivé (S722).

7. Procédé selon la revendication 4, dans lequel,
à condition que l'instruction de commande cible soit une instruction de commande pour commander le commutateur cible à être activé, la phase cible comprend la phase de précharge et la phase de commutation ; et
le module de commande entrant dans la phase cible, en réponse à l'instruction de commande cible ; et pendant la phase cible, commander, par le module de commande, l'unité de commutation auxiliaire correspondant à l'unité de commutation cible des *N* premières unités de commutation de commande à passer au premier état activé-désactivé, et commander l'unité de commutation à semi-conducteur à passer au deuxième état activé-désactivé (S720) comprend :
le module de commande entrant dans la phase de précharge, en réponse à l'instruction de commande cible (S723) ;
commander, par le module de commande, pendant la phase de précharge, l'unité de commutation auxiliaire correspondant à l'unité de commutation cible à passer à l'état activé continu, et commander l'unité de commutation à semi-conducteur à passer à l'état activé intermittent (S724) ;
le module de commande entrant dans la phase de commutation, à condition qu'une condition d'arrêt de précharge soit satisfaite (S725) ; et
commander, par le module de commande, pendant la phase de commutation, l'unité de commutation auxiliaire correspondant à l'unité de commutation cible à passer à l'état activé continu, et à passer du deuxième état activé-désactivé à l'état activé continu (S726).

8. Procédé selon la revendication 7, dans lequel,
l'instruction de commande cible comprend au moins une parmi une instruction de demande de mise sous tension d'un appareil électrique, une instruction de demande de recharge de la batterie (P1) et une instruction de demande de mise sous tension d'un dispositif électrique à haute tension ;
à condition que l'instruction de commande cible comprenne l'instruction de demande de mise sous tension de l'appareil électrique, l'unité de commutation cible comprend une unité de commutation positive principale (K61+) et/ou une unité de commutation négative principale (K61-) ;
à condition que l'instruction de commande cible comprenne l'instruction de demande de recharge de la batterie (P1), l'unité de commutation cible comprend une unité de commutation positive de recharge (K62+) et/ou une unité de commutation négative de recharge (K62-) ; et
à condition que l'instruction de commande cible comprenne l'instruction de demande de mise sous tension du dispositif électrique à haute tension, l'unité de commutation cible comprend une première unité de commutation électrique (K63+) et/ou une deuxième unité de commutation électrique.

9. Procédé selon la revendication 4, dans lequel,
à condition que l'instruction de commande cible soit une instruction de commande pour commander le commutateur cible à être désactivé, l'instruction de commande cible comprend au moins une parmi une instruction de demande de mise hors tension d'un appareil électrique, une instruction de demande de fin de recharge de la batterie (P1) et une instruction de demande de mise hors tension d'un dispositif électrique à haute tension ;
à condition que l'instruction de commande cible comprenne l'instruction de demande de mise hors tension de l'appareil électrique, l'unité de commutation cible comprend une unité de commutation positive principale (K61+) et/ou une unité de commutation négative principale (K61-) ;
à condition que l'instruction de commande cible comprenne l'instruction de demande de fin recharge de la batterie (P1), l'unité de commutation cible comprend une unité de commutation positive de recharge (K62+) et/ou une unité de commutation négative de recharge (K62-) ; et
à condition que l'instruction de commande cible comprenne l'instruction de demande de mise hors tension du dispositif électrique à haute tension, l'unité de commutation cible comprend une première unité de commutation électrique (K63+) et/ou une deuxième unité de commutation électrique.

10. Boucle à haute tension de batterie, comprenant :
le circuit protecteur de sécurité selon l'une quelconque des revendications 1 à 3 ; et
des premières unités de commutation de commande (K61+ ... K6N+ ou K61-... K6N-), dans lequel les premières unités de commutation de commande (K61+ ... K6N+ ou K61-... K6N-) sont disposés sur les lignes de transmission d'énergie de la batterie (P1).

11. Appareil électrique comprenant :
le circuit protecteur de sécurité selon l'une quelconque des revendications 1 à 3 ;
des premières unités de commutation de commande (K61+ ... K6N+ ou K61-... K6N-), dans lequel les premières unités de commutation de commande (K61+ ... K6N+ ou K61- ... K6N-) sont disposés sur les lignes de transmission d'énergie de la batterie (P1) ; et
la batterie (P1).

12. Dispositif de commande de circuit, **caractérisé en ce que** le dispositif comprend : un processeur (1101) et une mémoire (1102) stockant des instructions de programme informatique ;
dans lequel le processeur (1101) lit et exécute les instructions de programme informatique pour mettre en oeuvre le procédé de commande de circuit selon l'une quelconque des revendications 4 à 9.

13. Support de stockage informatique, **caractérisé en ce que** le support de stockage informatique stocke des instructions de programme informatique qui, lorsqu'elles sont exécutées par un processeur (1101), mettent en oeuvre le procédé de commande de circuit selon l'une quelconque des revendications 4 à 9.
